# EUROPEAN PATENT SPECIFICATION

(11) **EP 1 528 363 B1**
(45) Date of publication and mention of the grant of the patent: **19.12.2007**
(21) Application number: 04256506.9
(22) Date of filing: 22.10.2004
(51) Int. Cl.: G01C 21/36, G08G 1/0967

(54) **Traffic condition notifying device, system and method**
Verkehrszustandsignalisierungsgerät, -system und -verfahren
Dispositif, système et procédé pour signaliser l' état du trafic

(30) Priority: 28.10.2003 JP 2003367036
(43) Date of publication of application: 04.05.2005
(73) Proprietor: Pioneer Corporation, Tokyo 153-8654 (JP); Increment P Corporation, Tokyo 153-8665 (JP)
(72) Inventor: Hirose, Koji, c/o Increment P Corporation, Tokyo 153-8665 (JP)
(74) Representative: Haley, Stephen

(56) References cited:
- US-A- 5 862 510
- US-A1- 2002 082 767
- US-A1- 2002 152 020

## Description

The present invention relates to a traffic condition notifying device causing a display section to display map information when a movable body travels, a system thereof, a method thereof, a program thereof, and a recording medium storing the program.

There has been a known in-vehicle navigation device that acquires traffic information (VICS data) such as traffic accidents and traffic-congestions etc. from a Vehicle Information Communication System (VICS) and superimposes indications representing the traffic conditions such as the traffic accidents and the traffic-congestions on map information to be displayed on a screen of a display unit in order to notify users. In many cases, when a traffic-congestion occurs, a secondary traffic-congestion might be occurred on the roads in the vicinity thereof by drivers making a detour to avoid the original traffic-congestion. The traffic condition provided based on the VICS data represents the current condition, and therefore the drivers making a detour to avoid the traffic-congestion based on the notified current traffic condition might be caught in the secondary traffic-congestion. Thus, there is a demand for improved navigation devices that can navigate drivers to travel smoothly.

There is also a known in-vehicle navigation device that predicts and notifies the current and future traffic conditions with the use of a statistical traffic-congestion information data obtained by statistically processing the past traffic-congestion information (see, for example, Reference: Japanese Patent Laid-Open Publication No. Hei 9-113290, the right column on page 3 to the left column on page 7). Such a configuration disclosed in the above-cited Reference notifies statistical traffic-congestion information according to time factors such as time and day of the week based on the statistical traffic-congestion information data by superimposing the information on map information in various expressions corresponding to conditions of the traffic-congestions. With the notified time and day of the week, users can predict the current and possible future traffic-congestions.

In the in-vehicle navigation device, when the current position of the vehicle is superimposed on the map information to be displayed on the display unit for navigating the traveling of the vehicle, the contents of the map information to be displayed may be restricted to the display of, for instance, only a main road, in the case that the map scale is too large. Owing to this, the map scale of the map information displayed for navigation is set to be relatively small, so that the vicinity of the current position of the vehicle can be displayed comparatively in detail, and the user can easily recognize the traveling condition. Thus, an effective navigation can further be provided by notifying the past traffic-congestion information as described in the above cited Reference, as well as the traffic-congestion expected to be occurred at the current time and in future based on the statistical traffic-congestion information data.

However, since the display area of the map information to be displayed for navigation is comparatively narrow area which is restricted to the vicinity of the current position of the vehicle, the traffic-congestion expected in the future on the travel route may not be displayed in the display area, and consequently, the user may recognize the predicted traffic-congestion only when the vehicle travels to the vicinity of the traffic-congestion, and it is displayed. Even when the vehicle travels to the vicinity of the traffic-congestion and the user recognizes it, the user might go back the route again for avoiding the traffic-congestion. Thus, further effective navigation is requested.

An object of the present invention is to provide a traffic condition notifying device for appropriately notifying a traffic condition of a movable body, a system thereof, a method thereof, a program thereof and a recording medium storing the program.

US-A-5862510 discloses a navigation device.

According to a first aspect of the present invention there is provided a traffic condition notifying device, comprising:
a map information acquirer for acquiring map information;
a traffic information acquirer for acquiring traffic information about a traffic condition for a movable body;
a timer for clocking a time;
a notification map generator for generating current map information, in which the traffic condition of a predetermined area at the current time is superimposed on the map information and prediction map information, in which the traffic condition of an area including at least the predetermined area with a predetermined period of time has passed is superimposed on the map information, based on the acquired traffic information; and
a display controller
characterised in that the display controller is arranged to control a display section, having separate first and second display areas, to display the current map information and the prediction map information substantially in parallel on the first display area and the second display area, respectively.

A traffic condition notifying system according to another aspect of the present invention includes: a server having a storage for stores map information; and the above-described traffic condition notifying device for acquiring the map information from the server over a network.

A traffic condition notifying system according to still another aspect of the present invention includes: the above-described traffic condition notifying device; and a terminal unit connected to the traffic condition notifying device over a network so as to transmit or receive data, the terminal unit including a display section for displaying the current map information and the prediction map information substantially in parallel on a single display area to be displayed.

According to a further aspect of the present invention there is provided a traffic condition notifying system, comprising:
a terminal unit including a display section to display map information; and
a server, to which the terminal unit is connected so as to transmit or receive data over a network, the server including a storage for storing the map information, a traffic information acquirer for acquiring traffic information about a traffic condition of a movable body, a timer for clocking a time, and a notification map generator for generating a current map information in which the traffic condition of a predetermined area at the current time is superimposed on the map information, and prediction map information in which the traffic condition of an area including at least the predetermined area when a predetermined period of time has passed is superimposed on the map information, based on the acquired traffic information,
wherein at least one of the terminal unit and the server includes a display controller,
characterised in that:
the display section comprises separate first and second display areas; and
the display controller is arranged to control the display section to display the current map information and the prediction map information substantially in parallel on the first display area and the second display area, respectively.

According to a still further aspect of the present invention, there is provided a traffic condition notifying method, comprising the steps of:
acquiring map information and traffic information about a traffic condition of a movable body;
generating current map information by superimposing on the map information the traffic condition of a predetermined area at the current time, as well as a prediction map information by superimposing on the map information the traffic condition of an area including at least the predetermined area with a predetermined period of time has passed, based on the acquired traffic information; and
controlling a display section, having separate first and second display areas, to display the current map information and the prediction map information substantially in parallel on the first display area and the second display area, respectively.

A traffic condition notifying program according to a yet further aspect of the present invention executes the above-described traffic condition notifying method by a computer.

A recording medium according to a yet further aspect of the present invention stores the above-described traffic condition notifying program in a manner readable by a computer.

In the drawings:
Fig. 1 is a block diagram showing the brief configuration of a navigation device according to a first embodiment of the present invention;
Fig. 2 is a conceptual diagram schematically showing a table structure for display data of map information according to the first embodiment;
Fig. 3 is a conceptual diagram schematically showing a table structure for matching data of the map information according to the first embodiment;
Fig. 4 is a conceptual diagram schematically showing a table structure for data in a traffic-congestion prediction table according to the first embodiment;
Fig. 5 is a conceptual diagram schematically showing a table structure for data in a calendar template according to the first embodiment;
Fig. 6 is a block diagram showing the brief configuration of a processor of the navigation device according to the first embodiment;
Fig. 7 is a conceptual diagram showing a screen display on which a traffic condition in a predetermined area is superimposed on the map information according to the first embodiment;
Fig. 8 is a conceptual diagram showing a screen display on which a traffic condition concerning with a positional relationship of a vehicle is superimposed on the map information according to the first embodiment;
Fig. 9 is a flowchart showing a processing for modifying the calendar template according to the first embodiment;
Fig. 10 is a conceptual diagram schematically showing the table structure for the data in the calendar template updated by a calendar modifier according to the first embodiment;
Fig. 11 is a flowchart showing a processing for searching a travel route according to the first embodiment;
Fig. 12 is a flowchart showing a processing for switching a display form at navigation according to the first embodiment;
Fig. 13 is a flowchart showing a processing for notifying the traffic condition by a dual-screen according to the first embodiment;
Fig. 14 is a block diagram showing the brief configuration of a navigation system according to a second embodiment of the present invention;
Fig. 15 is a block diagram showing the brief configuration of a terminal unit according to the second embodiment;
Fig. 16 is a block diagram showing the brief configuration of a processor of the terminal unit according to the second embodiment;
Fig. 17 is a block diagram showing the brief configuration of a server according to the second embodiment;
Fig. 18 is a block diagram showing the brief configuration of a CPU of the server according to the second embodiment;
Fig. 19 is a flowchart showing a processing for modifying a calendar template according to the second embodiment; and
Fig. 20 is a flowchart showing a processing for searching a travel route according to the second embodiment.

### [First Embodiment]

Now, a first embodiment of the present invention will be described with reference to the attached drawings. A navigation device of this embodiment is an example of a traffic condition notifying device of the present invention, which is designed to navigate a movable body (e.g. a vehicle) driving concerning with a traveling condition. The traffic condition notifying device of the present invention is not necessarily designed to navigate a vehicle driving, but may also be designed to notify traffic condition for any types of movable body such as a portable type carried by a user.

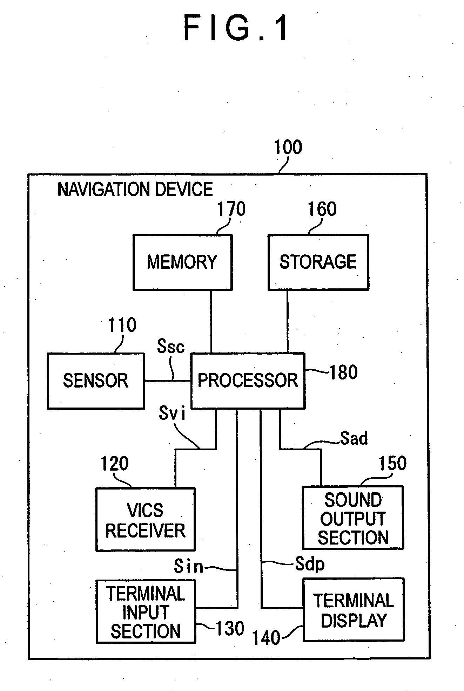

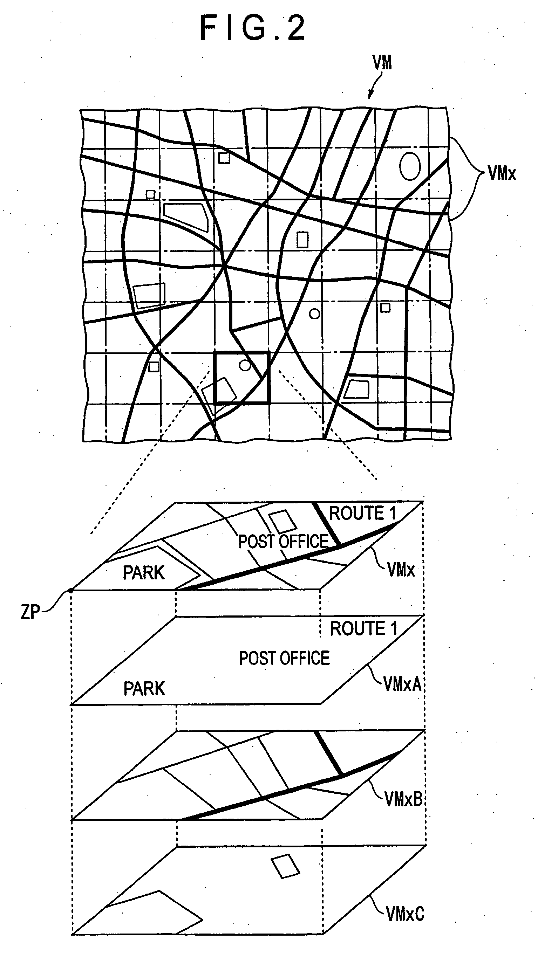

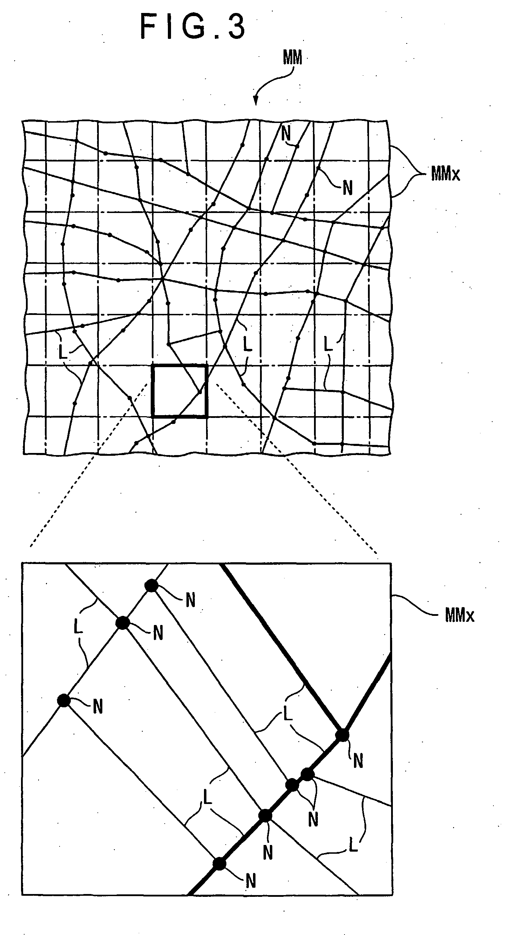

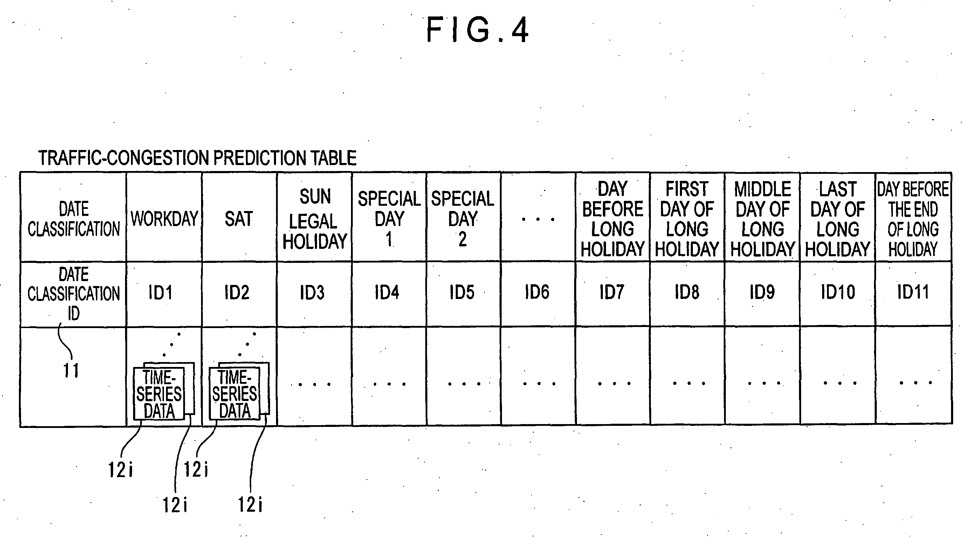

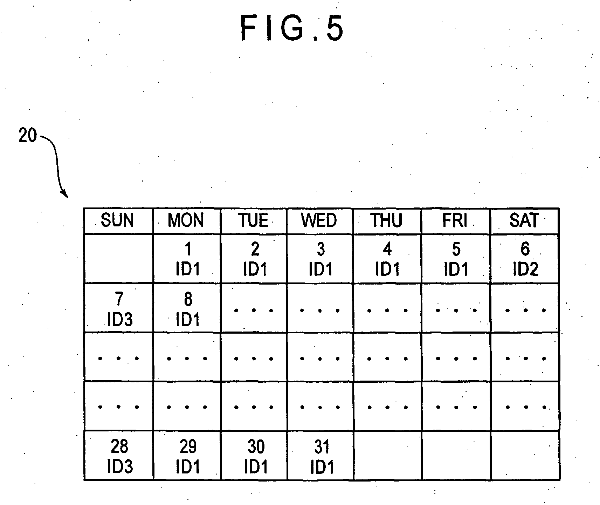

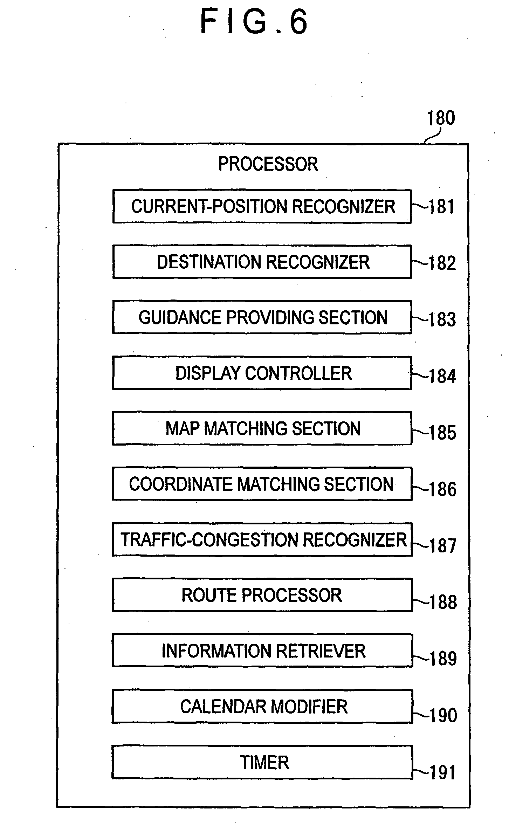

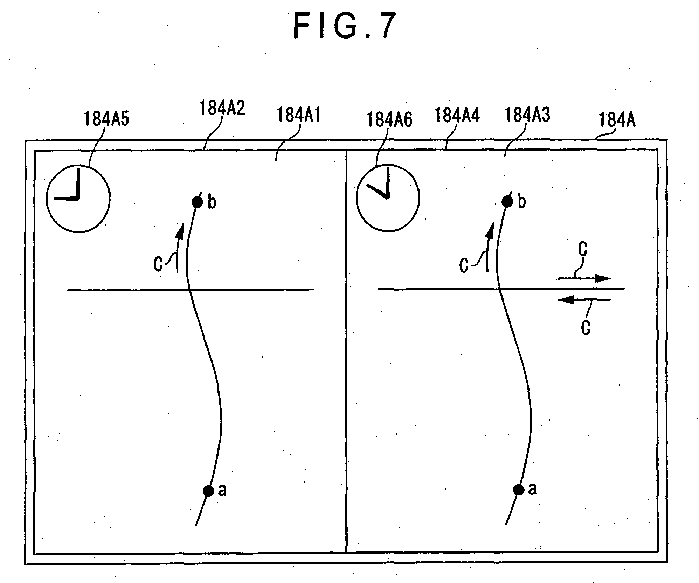

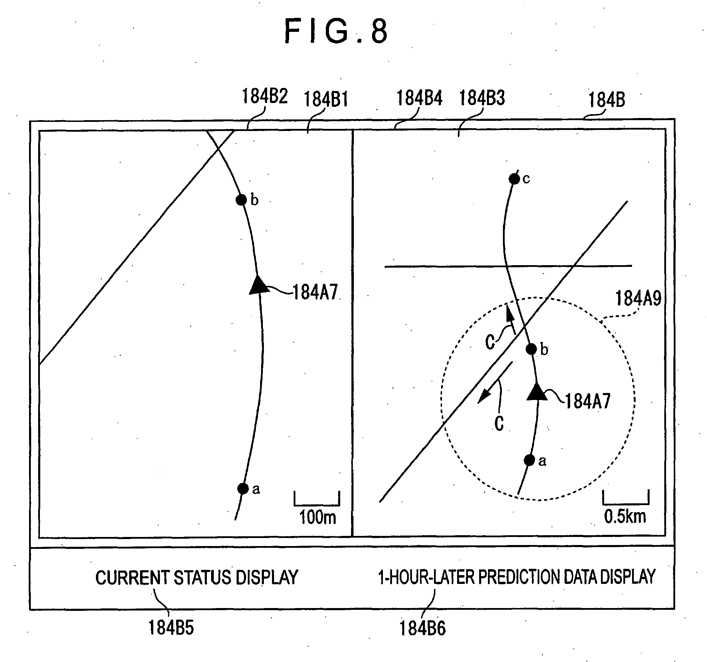

Fig. 1 is a block diagram showing the brief configuration of the navigation device according to the first embodiment. Fig. 2 is a conceptual diagram schematically showing a table structure for display data of map information. Fig. 3 is a conceptual diagram schematically showing a table structure for matching data of the map information. Fig. 4 is a conceptual diagram schematically showing a table structure for data in a traffic-congestion prediction table. Fig. 5 is a conceptual diagram schematically showing a table structure for data in a calendar template. Fig. 6 is a block diagram showing the brief configuration of a processor of the navigation device. Fig. 7 is a conceptual diagram showing a screen display on which a traffic condition in a predetermined area is superimposed on the map information. Fig. 8 is a conceptual diagram showing a screen display on which a traffic condition concerning with a positional relationship of a vehicle is superimposed on the map information.

### [Configuration of Navigation Device]

Referring to Fig. 1, the reference numeral 100 denotes the navigation device (traffic condition notifying device). The navigation device 100 notifies guidance on a travel along with a traveling condition of a movable body (e.g. a vehicle). The movable body is not limited to a vehicle, but includes any types of movable body such as an aircraft and a ship. The navigation device 100 may be, for example, an in-vehicle unit installed in a vehicle as a movable body, a portable unit, a PDA (Personal Digital Assistant), a mobile phone, a PHS (Personal Handyphone System) or a portable personal computer. The navigation device 100 searches for and displays information about a current-position and a destination, a route to the destination, predetermined shops nearby, and information about service offered by the shops on the basis of map information owned by the navigation device 100. As shown in Fig. 1, the navigation device 100 has a sensor 110, a VICS (Vehicle Information Communication System) receiver 120 as a traffic information acquirer, a terminal input section 130 functioning as a request signal generator, a terminal display 140 as a display section, a sound output section 150, a storage 160, a memory 170, a processor 180 and so on.

The sensor 110 detects the traveling condition of a vehicle as a movable body, i.e. the current-position and the driving status, and outputs it as a predetermined signal Ssc to the processor 180. The sensor 110, for instance, has a GPS (Global Positioning System) receiver (not shown) and various sensors (not shown) such as a speed sensor, an azimuth sensor and an acceleration sensor.

The GPS receiver receives electric navigation waves output from a GPS satellite (not shown), which is an artificial satellite, via a GPS antenna (not shown). Then, the GPS receiver calculates simulated coordinate values of the current-position on the basis of a signal corresponding to the received electric navigation waves and outputs the calculated coordinate values as a GPS data to the processor 180.

The speed sensor of the sensor 110 is arranged on a movable body (e.g. a vehicle) so as to detect the driving speed and the actual acceleration of the vehicle on the basis of a signal that varies depending on the driving speed, or the traveling speed, of the vehicle. The speed sensor reads a pulse signal, a voltage value and the like output in response to the revolution of the axles and the wheels of the vehicle. Then, the speed sensor outputs detection information such as the read pulse signal and the voltage value to the processor 180. The azimuth sensor is arranged on the vehicle and provided with a so-called gyro-sensor (not shown) so as to detect the azimuth of the vehicle, i.e., the driving direction to which the vehicle is heading. The azimuth sensor outputs a signal representing detection information about the detected driving direction to the processor 180. The acceleration sensor is arranged on the vehicle so as to detect the acceleration of the vehicle in the driving direction thereof. The acceleration sensor converts the detected acceleration into a sensor output value, which is detection information such as the pulse and the voltage, and then outputs the sensor output value to the processor 180.

The VICS receiver 120 has a VICS antenna (not shown) and acquires traffic information via the VICS antenna. More specifically, the VICS receiver 120 acquires traffic information (hereinafter referred to as VICS data) about traffic-congestions, traffic accidents, constructions, traffic controls and so on from the VICS (not shown) by way of a beacon, FM multiplex broadcasting or the like. The acquired traffic information is output as a predetermined signal Svi to the processor 180.

The VICS data has a table structure typically containing a plurality of following conceptual items formed as a set of data.
· traffic-congestion rating: congested, slow, smooth, etc.
· leading position of traffic-congestion
· length of traffic-congestion
· link travel time information: travel time required for a vehicle to pass through a VICS link (distance between intersections)
· zone travel time information: travel time required for a vehicle to pass through a predetermined zone longer than a VICS link
· information about traffic controls, causes thereof, controlled areas
· information about vacancies in parking areas
· information about rest areas and parking areas
· other information

The terminal input section 130, which may be a keyboard, a mouse or the like, has various operation buttons and operation knobs (not shown) to be used for input operations. The operation buttons and the operation knobs are used to input, for example, the setting items for setting the operation contents of the navigation device 100. More specifically, the setting items may be setting of information contents as well as its criteria to be acquired, setting of a destination, information retrieval, setting of displaying the driving status (traveling condition) of the vehicle, setting of switching the display. When the settings are input, the terminal input section 130 outputs a predetermined signal Sin to the processor 180 so as to apply the settings. In place of the operation buttons and the operation knobs, the terminal input section 130 may include any types of input unit such as a touch panel that may be arranged at the terminal display 140 and a sound input section for the input operations thereof as long as various settings can be input.

The terminal display 140, under the control of the processor 180, displays a signal Sdp representing an image data sent from the processor 180. The image data may be those representing map information and retrieval information, TV image data received by a TV receiver (not shown), those stored in an external device or recording medium such as an optical disk, a magnetic disk or a memory card and read by a drive or a driver, and those in the memory 170. The terminal display 140 may typically be a liquid-crystal display panel, an organic EL (Electro Luminescence) panel, a PDP (Plasma Display Panel), a CRT (Cathode-Ray Tube), a FED (Field Emission Display), or an electrophoretic display.

The sound output section 150 has a sound generator such as a speaker (not shown). The sound output section 150, under the control of the processor 180, outputs various signals Sad as sounds from the sound generator. The various signals Sad represent the sound data etc. from the processor 180. Information output as sounds, which may be the driving direction, the driving status, the traffic condition and the like of the vehicle are notified to occupants such as a driver of the vehicle for navigating the vehicle. The sound generator may output a TV sound data received by a TV receiver (not shown) and sound data stored in a recording medium or the memory 170. In place of the sound generator, the sound output section 150 may use a sound generator equipped on the vehicle.

The storage 160 readably stores map information as shown in Figs. 2 and 3 and a traffic-congestion prediction table 10 as shown in Fig. 4. Although not shown, the storage 160 includes a map information storage area for storing the map information and a traffic-congestion prediction table storage area for storing the traffic-congestion prediction table 10. While the storage 160 has the above-mentioned two storage areas in this embodiment, the storage 160 may not have any of the above-mentioned storage areas, or may have additional storage areas. The storage 160 may include drives or drivers for readably storing data on a recording medium such as a HD (Hard disks), a DVD (Digital Versatile Disk), an optical disk and a memory card.

The map information includes display data VM, which is so-called POI (Point Of Interest) data as shown in Fig. 2, matching data MM as shown in Fig. 3, route search map information and the like.

The display data VM includes, for example, a plurality of display mesh information VMx, each having a unique number. To be more specific, the display data VM is divided into a plurality of display mesh information VMx, each relating to an area. The display data VM is constituted from the plurality of display mesh information VMx continuously arranged in a matrix form. The display mesh information VMx may be further divided into a plurality of display mesh information VMx to be contained in a lower layer, each relating to a smaller area. Each display mesh information VMx has a rectangular shape with each side thereof having a predetermined length, which is reduced relative to the actual geographic length according to the map scale. A predetermined corner thereof contains absolute coordinates ZP in the whole map information, e.g., a global map.

The display mesh information VMx is, for instance, constituted from name information VMxA such as intersection names, road information VMxB and background information VMxC. The name information VMxA is data structured in a table for arranging and displaying miscellaneous element data (e.g. intersection name, town name) contained in an area at a predetermined position with reference to the positional relationship based on the absolute coordinates ZP. The road information VMxB is data structured in a table for arranging and displaying road element data (e.g. road) contained in an area at a predetermined position with reference to the positional relationship based on the absolute coordinates ZP. The background information VMxC is data structured in a table for arranging and displaying miscellaneous element data (e.g. mark and image information representing famous spots and buildings) at a predetermined position with reference to the positional relationship based on the absolute coordinates ZP.

The matching data MM, just like the display data VM, is divided into a plurality of matching mesh information MMx, each having a unique number and relating to an area. The matching data MM is constituted from the plurality of matching mesh information MMx continuously arranged in a matrix form. The matching mesh information MMx may be further divided into a plurality of matching mesh information MMx to be contained in a lower layer, each relating to a smaller area. Each matching mesh information MMx has a rectangular shape with each side thereof having a predetermined length, which is reduced relative to the actual geographic length according to the map scale. A predetermined corner thereof contains absolute coordinates ZP in the whole map information, e.g., a global map. The matching mesh information MMx and the display mesh information VMx may not necessarily represent the same area. That is, they may be divided according to different scales. If the same scale is used, unique number information may be used for associating the data. If a different scale is used, the absolute coordinates may be used for associating the data.

The matching data MM is used for the map matching processing for correcting the displayed information to locate a mark representing the vehicle on a road, when the traveling condition of the vehicle is superimposed on the map information. This processing prevents such errors that the mark representing the vehicle is displayed on a building instead of the road. The matching data MM has a plurality of link string block information.

As shown in Fig. 3, the link string block information is data structured in a table so that a plurality of links L are mutually associated according to a predetermined rule. The link L as segment information represents a road and connects nodes N as the point information. Specifically, the links L each corresponding to a predetermined segment of a road are mutually connected like a line as a link string, which represents a continuous road such as Koshu street and Ome street. Each link L has unique segment information (hereafter referred to as a link ID) as a unique number assigned to each link L, and node information as a unique number indicating two nodes N connected by the link L. Each link L is associated with a VICS link, so that the positional relationship between the VICS data and the displayed map can be corresponded with each other.

Each node N represents a joint point such as an intersection, a corner, a fork, a junction or the like of each road. Information about the node N has unique point information as a unique number assigned to each node N in the link string block information, coordinate information of the position where each node N is located, and flag information as branching information describing whether the node N represents a branching position (e.g. intersection, fork) where a plurality of links are crossed or not. Some nodes N may only have the unique point information and the coordinate information without the flag information for simply representing the shape of a road, while some nodes N may additionally have attribute information representing the road structure such as width of a tunnel or a road. The nodes N without the flag information for simply representing the road shapes are not used when a coordinate matching section 186 (which will be described later) determines whether or not the points are identical.

The route search map information is structured in a table, which is similar to that of the matching data MM, including the point information for representing points such as the nodes N representing roads, and the segment information for connecting points such as the links L. The information is so structured to represent roads for searching for the travel route.

The traffic-congestion prediction table 10, which includes statistical traffic information obtained by statistically processing the past traffic conditions based on time factors, is a set of data for showing traffic conditions in the past at an arbitrary location. The traffic-congestion prediction table 10 is used to predict traffic-congestions at the processing for travel route search and the processing for displaying a map. The traffic-congestion prediction table 10, as shown in Fig. 4, stores a plurality of records, each single record containing a date classification ID (identification) 11, time-series data 12i (i representing a natural number) and the like.

The date classification ID 11 is typically an ID number representing a classification of date of the year and day of the week. In the following description, classification of date of the year and day of the week will be referred to as date classification. For example, "ID1" may indicate any "workday" such as Monday to Friday excluding legal holidays; "ID2" may indicate "Saturday" excluding legal holidays; "ID4" may indicate "special day 1" such as a festival day of City A; "ID5" may indicate "special day 2" such as a day when a sports meeting is held at Athletic Ground B; "ID7" may indicate "the day before a long holiday" such as the day before four consecutive holidays; and "ID 11" may indicate "the day before the end of a long holiday" such as the third day of four consecutive holidays. The date classification ID 11 is not limited to the ID number, but may alternatively be a text data directly related to a day such as "workday".

The time-series data 12i is data on the tendency of traffic-congestions of the traffic conditions. For example, a VICS data may be acquired from the VICS and stored for each VICS link, and then statistically processed for every 10 minutes based on the time factor of the stored VICS link (i.e., date classification) so as to be used as the time-series data 12i. In other words, the time-series data 12i is data representing conditions of traffic-congestions at desired locations (which might be each VICS link) for every predetermined time, such as the length of the traffic-congestions, the traffic-congestion ratings and the time required for passing through the traffic-congestions. While the time-series data 12i described above is data generated by statistically processing the data for each location based on the time factor, it may alternatively be generated for each facility, shop, area, city and town, or road.

The storage 160, for instance, stores the retrieval information for acquiring information of a predetermined point in the map information. More specifically, the retrieval information includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The memory 170 readably stores the settings that are input by the terminal input section 130, a music data and an image data as well as a plurality of calendar templates 20 as shown in Fig. 5. The memory 170 also stores various programs that run on the OS (Operating System) controlling the whole operation of the navigation device 100. The memory 170 may preferably be a CMOS (Complementary Metal-Oxide Semiconductor) memory that retains the stored data even in the case of a sudden power interruption caused by a blackout. The memory 170 may include drives or drivers for readably storing data on a recording medium such as a HD, a DVD, and an optical disk.

The calendar template 20 is a template representing a date classification of each date. More specifically, the calendar template 20 is a table, where a plurality of table data for every month, typically twelve table data, are stored. The respective table data have a plurality of records, each containing date information about date, classification ID numbers assigned to respective dates of the date information.

The classification ID number is identical to one of the date classification IDs 11 in the traffic-congestion prediction table 10 and indicates the date classification of the date specified by the date information. For example, Friday 5th is classified as "workday" associated with "ID 1", and Monday 15th is classified as "legal holiday" associated with "ID3". The classification ID number of the calendar template 20 can be modified by the processor 180 if necessary. The classification ID number is not limited to numerical values, but may alternatively be a text data (e.g. "workday") corresponding to the date classification ID in the traffic-congestion prediction table 10.

The processor 180 has various input/output ports (not shown) including a VICS receiving port connected to a VICS antenna, a GPS receiving port connected to a GPS receiver, sensor ports respectively connected to various sensors, a key input port connected to the terminal input section 130, a display control port connected to the terminal display 140, a sound control port connected to the sound output section 150, a storage port connected to the storage 160 and a memory port connected to the memory 170. As shown in Fig. 6, the processor 180 has various programs such as a current-position recognizer 181 (current-position information acquirer), a destination recognizer 182 (destination information acquirer), a guidance providing section 183, a display controller 184 (request information acquirer and notification map generator), a map matching section 185, a coordinate matching section 186, a traffic-congestion recognizer 187 (map information acquirer, current traffic information acquirer, statistical traffic information acquirer, and traffic information acquirer), a route processor 188 (predicted position recognizer, request signal recognizer, and travel route setting section), an information retriever 189, a calendar modifier 190, a timer 191 and so on.

The current-position recognizer 181 recognizes the current-position of the vehicle. More specifically, it calculates a plurality of current simulated positions of the vehicle on the basis of the speed data and the azimuth data of the vehicle output respectively from the speed sensor and the azimuth sensor of the sensor 110. The current-position recognizer 181 further recognizes the current simulated coordinates values of the vehicle on the basis of the GPS data about the current-position output from the GPS receiver. Then, the current-position recognizer 181 compares the calculated current simulated positions with the recognized current simulated coordinates values, and calculates the current-position of the vehicle on map information separately acquired so as to recognize the current-position.

The current-position recognizer 181 determines a slope angle and an altitude of a drive road on the basis of the acceleration data output from the acceleration sensor and calculates the current simulated position of the vehicle so as to recognize the current-position. Thus, the current-position of the vehicle can be accurately recognized even if the vehicle is on an intersection with an overpass or on an elevated highway where roads are overplayed in a two-dimensional view. Furthermore, when the vehicle runs on a mountain road or a slope, the current-position recognizer 181 corrects the difference between the travel distance obtained only on the basis of the speed data and the azimuth data and the actual driving distance of the vehicle by using the detected slope angle of the road to accurately recognize the current-position.

The current-position recognizer 181 can recognize not only the current-position of the vehicle as described above but also a starting point, i.e. an initial point set by the terminal input section 130 as the current simulated position. Various information acquired by the current-position recognizer 181 are appropriately stored in the memory 170.

The destination recognizer 182, for instance, acquires the destination information about the destination set by the input operation at the terminal input section 130 and recognizes the position of the destination. The destination information to be set includes various information for identifying a location, which might be coordinates such as latitude and longitude, addresses, telephone numbers and the like. Such destination information recognized by the destination recognizer 182 is appropriately stored in the memory 170.

The guidance providing section 183 provides guidance stored in the memory 170 in visual form by using the terminal display 140 or in audio form by using the sound output section 150 on the basis of travel route information and feature guidance information acquired in advance according to the driving status. The guidance is related to the travel of the vehicle, for instance, the contents for assisting the drive of the vehicle. For example, a predetermined arrow and a sign may be displayed on the screen of the terminal display 140, or a voice guidance such as "Turn right toward XX at the intersections of YY 700m ahead", "The vehicle is off the travel route" or "A traffic-congestion is ahead" may be provided from the sound output section 150.

The display controller 184 controls the terminal display 140 and makes the terminal display 140 display various information on a screen for notifying the user. In response to a predetermined input operation by the terminal input section 130 or to recognition of various signals, as shown in Figs. 7 and 8 for example, the display controller 184 generates current map information 184A1, 184B1 and prediction map information 184A3, 184B3, and then, displays the current map information 184A1, 184B1 and the prediction map information 184A3, 184B3 substantially in parallel on the terminal display 140 at a display area on a screen thereof. Additionally, the display controller 184 displays information about times such as the current time and a predetermined elapsed time clocked by the timer 191 together with the current map information 184A1, 184B1 and the prediction map information 184A3, 184B3.

Note that, the current map information 184A1, 184B1 is information on which a traffic condition in a predetermined area at the current time clocked by the timer 191 is superimposed on the map information. Besides, the prediction map information 184A3, 184B3 is information on which a prediction traffic condition in a predetermined area corresponding to that of the current map information 184A1, 184B1, for instance the same area as that of the current map information 184A1 as shown in Fig. 7, or the same area as that of the current map information 184B1 as shown in Fig. 8, when a predetermined period of time has passed, for instance, when a predetermined time set by an input operation by the terminal input section 130 has passed, is superimposed on the map information. For example, Figs. 7 and 8 show screens 184A, 184B to be displayed on the terminal display 140 according to a display software such as web browser. The screens 184A, 184B is screen information which is display data based on a display form previously stored, for example, in the storage 160, the screen 184A, 184B being provided with a first display area 184A2, 184B2 on which the current map information 184A1, 184B1 is displayed, and a second display area 184A4, 184B4 on which the prediction map information 184A3, 184B3 is displayed. In Fig. 7, a current time icon 184A5, which is image information for displaying the current time indicating the current map information 184A1, is superimposed on the first display area 184A2, while an elapsed time icon 184A6, which is image information for displaying the time when an hour has passed indicating the prediction map information 184A3, is superimposed on the second display area 184A4. Fig. 8 is an example, in which a text box is provided for displaying a text data 184B5 such as "current status display" indicating the current map information 184B1, the text box being adjacent to the first display area 184B2, while a text box is provided for displaying a text data 184B6 such as "1-hour-later prediction data display" indicating the prediction map information 184B3, the text box being adjacent to the second display area 184B4.

Further, the display controller 184 modifies the display area on which the current map information 184A1, 184B1 and the prediction map information 184A3, 184B3 are displayed. For example, the display controller 184 modifies a map scale for displaying the map information, or modifies the area to be displayed. Additionally, the display controller 184 displays various screens for prompting a user to operate the terminal input section 130 so as to set various information.

The map matching section 185 performs the map matching processing for displaying the current-position recognized by the current-position recognizer 181 based on the map information obtained from the storage 160. As described earlier, the map matching section 185 typically uses the matching data MM for performing the map matching processing to modify or correct the current-position information to prevent the current-position superimposed on the map on the terminal display 140 from being located off the road as an element of the map displayed on the terminal display 140.

The coordinate matching section 186 performs the coordinate matching processing for determining if point information about nodes N contained in the matching data MM of the map information acquired from the storage 160 indicate an identical point or not. In other words, as described earlier, the coordinate matching section 186 acquires point information of nodes N contained in the matching data MM and reads the coordinate information of the point information. More specifically, the coordinate matching section 186 calculates the coordinate values such as the latitude and the longitude on the basis of information on the coordinate values of the coordinate information and the offset amount. If different nodes N have identical coordinate values, it reads the flag information of the point information of the nodes N to determine whether the nodes N represent the identical point. If the coordinate matching section 186 determines that the nodes N are identical, it recognizes that the links L respectively connected to the nodes N and contained in the different link string block information are crossed with each other, and thus considers as, for example, an intersection. If, on the other hand, the coordinate matching section 186 determines that the nodes N are not identical, it recognizes that the links L respectively connected to the nodes N and contained in the different link string block information are not crossed with each other, and thus considers as, for example, a multi-level intersection.

The traffic-congestion recognizer 187 generates current traffic-congestion information about the traffic-congestions that are currently present. More specifically, the traffic-congestion recognizer 187 appropriately acquires the VICS data from the VICS output from the VICS receiver 120. Then, it generates current traffic-congestion information about the traffic-congestion (current traffic condition) which is currently present in an area including, for example, the current-position and the destination or in a predetermined area around the current-position.

Additionally, the traffic-congestion recognizer 187 calculates the predicted arrival time as a predicted time to arrive at a desired destination. For example, firstly the traffic-congestion recognizer 187 calculates the predicted arrival time as the predicted time to arrive at the desired destination. The traffic-congestion recognizer 187 acquires a predicted time that is set with the input operation by the terminal input section 130, or a preset scheduled time which is a time having elapsed from the current point of time. Then based on the calculated predicted arrival time, a predicted arrival time which is a preset scheduled time set in advance, the time-series data 12i, the traffic-congestion recognizer 187 generates traffic-congestion prediction information about prediction of the traffic-congestion (predicted traffic condition) that may arise at any locations before arriving at the destination or at the preset scheduled time.

More specifically, the traffic-congestion recognizer 187 recognizes the classification ID number of the date for which traffic-congestion prediction will be performed on the basis of the time information acquired from the timer 191 and the calendar template 20. Then, the traffic-congestion recognizer 187 retrieves and acquires the time-series data 12i for the area corresponding to the recognized classification ID number and including the current-position and the destination from the traffic-congestion prediction table 10. After that, based on the current traffic-congestion information and the current time acquired from the timer 191, the traffic-congestion recognizer 187 calculates the predicted arrival time to arrive at a desired location on a candidate travel route specified by candidate travel route information (which will be described later) generated by the route processor 188.

The predicted arrival time may be calculated with a method below, for example. Firstly, the distance to a desired location on the candidate travel route is recognized based on the candidate travel route information, and the time required to travel the recognized distance is calculated based on the current traffic-congestion information. Subsequently, the predicted arrival time is calculated on the basis of the calculated required time and the current time. Then, traffic-congestion prediction information is generated on the basis of the time-series data 12i and the predicted arrival time.

The route processor 188 searches for a travel route by calculating the driving route of the vehicle on the basis of the setting information that is set by a user for setting the route as well as the map information stored in the storage 160. The route processor 188 can calculate the travel route by taking the current traffic-congestion information and the traffic-congestion prediction information generated by the traffic-congestion recognizer 187 into consideration when the processor 180 recognizes traffic-congestion prediction request information requesting a travel route search with the traffic-congestion information and the traffic-congestion prediction considered.

More specifically, if the setting information does not contain the traffic-congestion prediction request information, the route processor 188 acquires the current-position, the destination, the setting information and the current traffic-congestion information. Then, based on the acquired information, the route processor 188 searches for available roads, where for example traffic is allowed, using the route search map information of the map information, and generates travel route information for setting a route with a shorter required time, a route with a shorter distance, or a route without traffic-congestions and traffic controls. After that, it determines the time required to arrive at the destination for each of the routes contained in the travel route information and generates required time information about the required time.

If, on the other hand, the setting information contains the traffic-congestion prediction request information, the route processor 188 acquires the current-position, the destination, the setting information and the current traffic-congestion information. Then, based on the acquired information, it generates candidate travel route information for setting a route with shorter required time, a route with shorter travel distance, or a candidate route without traffic-congestions and traffic controls. After that, it acquires the current traffic-congestion information and the traffic-congestion prediction information and reduces the number of the candidate route contained in the candidate travel route information based on the acquired information, and thus generates travel route information for setting a route etc.

At the step for searching for the travel route, the route processor 188 might use the matching data MM of the map information in addition to the route search map information. This applies to, for instance, the case where the route processor 188 searches for the travel route including a narrow road such as a back street not contained in the route search map information. When the matching data MM is used, the route is appropriately searched according to recognition on the road arrangement recognized by the coordinate matching section 186. The travel route information includes, for example, the route guidance information for navigating the vehicle to assist the drive thereof. The route guidance information may be appropriately displayed on the terminal display 140 or output as sounds from the sound output section 150 to assist the drive.

The route processor 188 calculates a predicted position where the vehicle arrives after a predetermined period of time being elapsed, and calculates the elapsed time and the time until the vehicle arrives at the predicted position based on the current position information, travel route information and the map information of the vehicle to generate predicted position information and predicted arrival time information. The acquired predicted position information and the predicted arrival time information is appropriately stored in the memory 170.

The information retriever 189 hierarchically retrieves and acquires the retrieval information, such as shops and facilities, stored in the storage 160 on the basis of the item information in response to, for example, a retrieval request for the retrieval information set at the terminal input section 130.

The calendar modifier 190 appropriately updates the calendar template 20 stored in the memory 170 on the basis of modifications set by the user. More specifically, the calendar modifier 190 recognizes various information set by the input operations of the user at the terminal input section 130. The set information may include date information for specifying date and event information about events such as festivals and sports meeting. Then, the calendar modifier 190 recognizes the date specified by the date information, and also recognizes the classification ID number associated with the event information. The classification ID number may be typically recognized as follows. The date classification is determined based on the set event information, and the classification ID number is recognized based on the determined date classification. If, for example, the event information relates to a sports meeting to be held at Athletic Ground B, the date classification is determined as "special day 2", and the classification ID number is recognized as "ID5" based on the "special day 2". If the event information relates to the last day of five consecutive holidays, the date classification is recognized as "the last day of a long holiday", and then the classification ID number as "ID 10" based on the "last day of a long holiday". Then, the calendar modifier 190 appropriately updates the calendar template 20 on the basis of the recognized date and the classification ID number.

The timer 191 recognizes the current time typically based on the pulse of an internal clock. Besides, the timer 191 can also clock an elapsed time from a predetermined time. Then, the timer 191 appropriately outputs time information about the recognized current time.

### [Operation of Navigation Device]

Now, the operation of the navigation device 100 will be described with reference to the drawings.

### (Calendar Template Modifying Process)

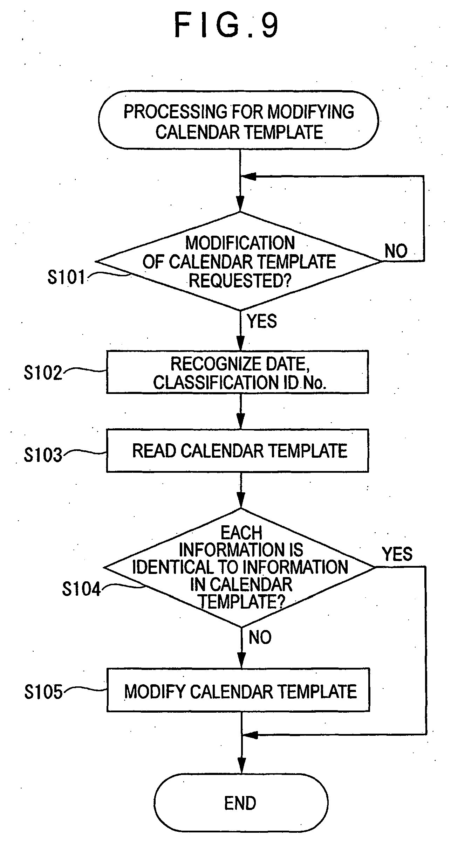

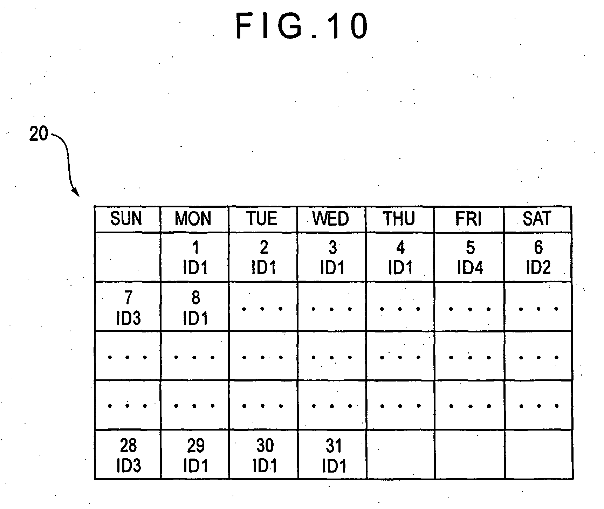

Firstly, the processing for modifying the calendar template 20 as one of the operations of the navigation device 100 will be described with reference to Figs. 9 and 10. Described herein is the processing for modifying the calendar template 20 as shown in Fig. 5 based on the information about, for example a festival scheduled on 5th in City A, that a user have recognized from the radio or TV broadcastings, printed information sources such as newspapers and official publications or acquired by connecting his or her mobile phone via the mobile phone line. Fig. 9 is a flowchart showing the processing for modifying a calendar template. Fig. 10 is a conceptual diagram schematically showing the table structure for the data in the calendar template updated by the calendar template modifier.

Firstly, the user in the vehicle switches on the navigation device 100 to supply the power thereto. When the power is supplied, the processor 180 controls the terminal display 140 to display a main menu and a screen for prompting the user to set a specific operation to be executed by the navigation device 100.

Then, as shown in Fig. 9, the user operates the terminal input section 130 to set a command for modifying the calendar template 20. When the processor 180 recognizes the set command for modifying the calendar template 20 at the calendar modifier 190 (step S101), it makes the terminal display 140 display a screen for prompting the user to set the date information and the event information necessary for modifying the calendar template 20.

When the user sets the date information and the event information by operating the terminal input section 130 following the instructions on the displayed screen, the calendar modifier 190 acquires the set date information and the event information. The user may set the date information and the event information by inputting characters thereof or selecting from a plurality of candidates displayed on the terminal display 140. Alternatively, a following method may be used. Firstly, the user selects a date by operating the terminal input section 130 and moving a flashing cursor displayed in or around the area of a date in the calendar template 20 as shown in Fig. 5. Then, the user sets the event information of the selected date by inputting characters or by selecting from a plurality of event information being displayed.

After acquiring the date information and the event information, the calendar modifier 190 recognizes the acquired various information (step S102). More specifically, the calendar modifier 190 recognizes the date specified by the date information and the classification ID number associated with the event information. In this example, the calendar modifier 190 recognizes the date specified by the date information as 5th. Also, it determines the date classification associated with the event information as "special day 1" for a festival to be held in City A, and recognizes the classification ID number as "ID4" based on the determined date classification.

Thereafter, the calendar modifier 190 reads out the calendar template 20 stored in the memory 170 (step S103). Then, the calendar modifier 190 determines if the information recognized in step S102 is identical to the information in the calendar template 20 read in step S103 or not (step S104). More specifically, it recognizes the classification ID number associated with the date recognized in step S102 based on the read calendar template 20. Then, it determines if the classification ID number recognized based on the calendar template 20 is identical to the classification ID number recognized in step S102 or not.

If the calendar modifier 190 determines in step S104 that the classification ID numbers are identical, it ends the processing without modifying the calendar template 20. If, on the other hand, the calendar modifier 190 determines that the classification ID numbers are not identical, it modifies the calendar template 20 on the basis of the various information recognized in step S102 (step S105) and ends the processing. More specifically, since the classification ID number of the 5th recognized in step S102 is "ID4" and the classification ID number of the 5th recognized based on the calendar template 20 is "ID1", the calendar modifier 190 changes the classification ID number of the 5th from "ID1" to "ID4" as shown in Fig. 10 and ends the processing.

### (Processing for Travel Route Search)

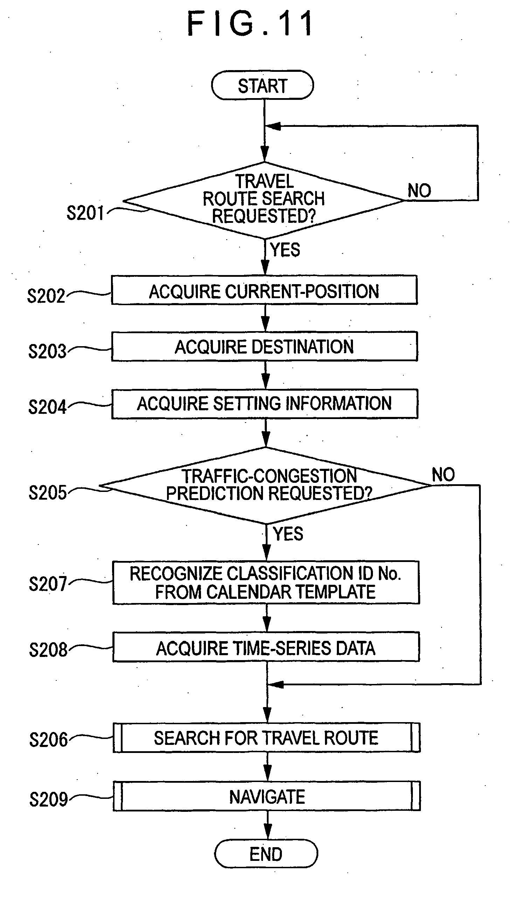

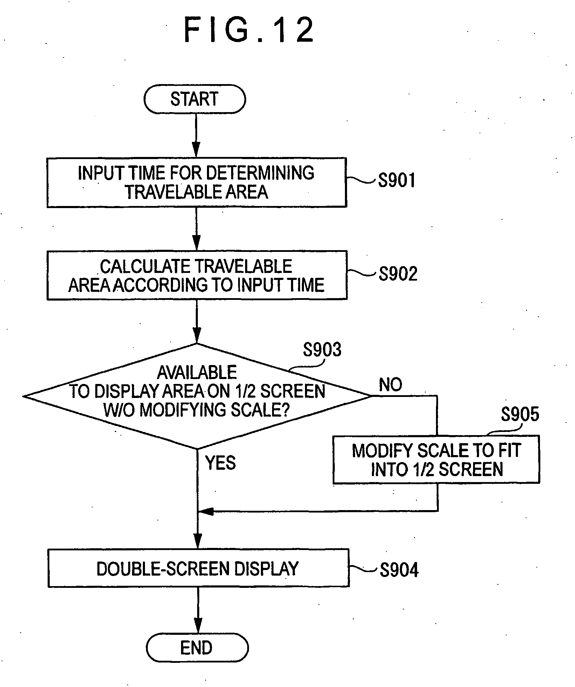

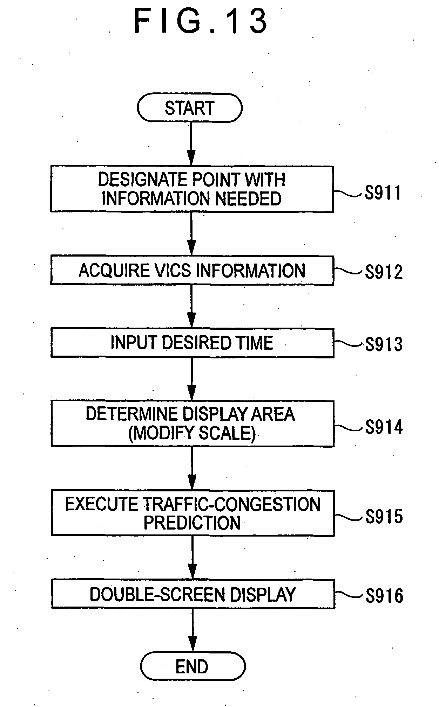

Now, the processing for searching a travel route as one of the operations of the navigation device 100 will be described with reference to Figs. 7 and 8 as well as Figs. 11 through 13. Fig. 11 is a flowchart showing the processing for searching a travel route in the navigation device. Fig. 12 is a flowchart showing the processing for switching the display at navigation. Fig. 13 is a flowchart showing the processing for notifying the traffic condition by a dual-screen.

Firstly as shown in Fig. 11, the user operates the terminal input section 130 to set a command for searching for a travel route. With this setting, a request signal for requesting the travel route is generated. When the route processor 188 of the processor 180 recognizes the request signal by the setting for searching for a travel route (step S201), the processor 180 makes the terminal display 140 display a screen for prompting the user to set various information necessary for travel route search such as the setting information including the destination, the setting information about the preference for shortest travel distance or shortest travel time and necessity of the traffic-congestion prediction.

When the processor 180 recognizes the various information necessary for the travel route search by the route processor 188, the current-position recognizer 181 recognizes the current-position (step S202) and the destination recognizer 182 recognizes the set destination (step S203). Specifically, the current-position recognizer 181 calculates the current-position of the vehicle on the basis of the speed data and the azimuth data of the vehicle respectively output from the speed sensor and the azimuth sensor of the sensor 110 and the GPS data about the current-position output from the GPS receiver, and acquires the current-position information. The acquired current-position information is appropriately stored in the memory 170.

The processor 180 controls the terminal display 140 by the display controller 184 to display a screen for prompting the user to set the destination with the input operation at the terminal input section 130. Then, when the user sets the destination by operating the terminal input section 130 following the instructions on the displayed screen, the destination recognizer 182 acquires the destination information about the set destination. The acquired destination information is appropriately stored in the memory 170.

If the user requests to acquire point information about a point of the destination in the step of inputting the destination by operating the terminal input section 130, the user operates the terminal input section 130 so as to request the retrieval information of the point following the instructions on the screed displayed on the terminal display 140. In response to the retrieval request for the retrieval information of the point, the processor 180 makes the information retriever 189 hierarchically retrieve the retrieval information about the destination from the mesh information at the lower layers for each area, typically using the map information MP and acquire the retrieval information associated with the point of the destination from the storage 160. Then, the processor 180 controls the terminal display 140 to display the acquired retrieval information.

If the retrieval information requires to display map information of a predetermined area containing the destination or if the user who has recognized the retrieval information operates the terminal input section 130 to display a predetermined area, the processor 180 appropriately controls the terminal display 140 by the display controller 184 to display the display mesh information VMx for the corresponding area. After the desired map information is displayed on the terminal display 140 in this way, the user identifies the point information of the destination by appropriately specifying the point of the destination with the input operation at the terminal input section 130, for example, by moving the cursor displayed on the map on the screen. When the point information is specified in this way, the destination recognizer 182 of the processor 180 recognizes the point information of the destination as the destination information and stores it in the memory 170.

The processor 180 controls the terminal display 140 by the display controller 184 to display an indication for prompting the user to input the settings, i.e., criteria for the travel route search. When the user inputs the settings by operating the terminal input section 130 following the instruction on the displayed screen, the processor 180 acquires the setting information about the settings that have been input (step S204). The acquired setting information is appropriately stored in the memory 170.

Thereafter, the route processor 188 of the processor 180 acquires the setting information stored in the memory 170 and determines if the acquired setting information contains the traffic-congestion prediction request information or not (step S205).

If the route processor 188 of the processor 180 determines in step S205 that the traffic-congestion prediction request information is not contained, the traffic-congestion recognizer 187 acquires the VICS data output from the VICS receiver 120. Then, the processor 180 generates current traffic-congestion information of an area containing the current-position and the destination based on the acquired VICS data. The generated current traffic-congestion information is appropriately stored in the memory 170.

Then, the route processor 188 of the processor 180 acquires the current-position information, the destination information, the setting information and the current traffic-congestion information from the memory 170. Based on the acquired various information, it performs a route search processing to search for the travel route from the current-position of the vehicle to the destination, using the route search map information and the matching data MM contained in the map information stored in the storage 160 (step S206).

For example, when searching for a major street of which data is stored and managed in the route search map information, the route is searched using the route search map information. On the other hand, when searching for a minor street of which data is not stored in the route search map information, the route from a minor street to a major street is searched using the matching data MM. While the route is searched using the matching data MM, the coordinate matching section 186 determines whether a plurality of nodes N indicate the identical point or not to recognize the road arrangement based on the relations between links L.

The route processor 188 detects a plurality of travel routes and selects some of the travel routes based on the acquired setting information and the current traffic-congestion information to generate the travel route information about, for instance, five candidate travel routes that meet the requirements of the user. Besides, the route processor 188 generates a required time information by obtaining a required time to the destination according to the respective travel routes in the travel route information. Then, the calculated travel route information including five candidate travel routes is displayed on the terminal display 140 by the display controller 184, and an indication representing the request that the user selects the travel route. The user selects and inputs the travel route information about any one of the route, and thus the travel route is set.

If, on the other hand, the route processor 188 determines in step S205 that the traffic-congestion prediction request information is contained, the processor 180 acquires the time information from the timer 191 and recognizes the current date based on the acquired time information. Then, it acquires the calendar template 20 from the memory 170, and then retrieves and recognizes the classification ID number of the recognized date based on the acquired calendar template 20 (step S207). It also acquires the current-position information and the destination information stored in the memory 170 and recognizes the current-position and the destination. Then, the traffic-congestion recognizer 187 retrieves and acquires the time-series data 12i corresponding to the recognized classification ID number and containing the current-position and the destination from the traffic-congestion prediction table 10 stored in the storage 160 (step S208)

Thereafter, the processor 180 performs the processing of the step S206. More specifically, the processor 180 generates current traffic-congestion information at the traffic-congestion recognizer 187 and appropriately stores it in the memory 170. Then, the route processor 188 of the processor 180 acquires the current-position information, the destination information and the setting information from the memory 170. Based on the acquired various information, the route processor 188 detects a plurality of travel routes and selects some of the travel routes on the basis of the acquired setting information to generate candidate travel route information about a plurality of candidate travel routes that meet the requirements of the user.

Thereafter, the traffic-congestion recognizer 187 of the processor 180 acquires the current traffic-congestion information from the memory 170 and the current time and day from the timer 191. Then, based on the acquired current traffic-congestion information and the current time and day, the traffic-congestion recognizer 187 estimates the predicted arrival time to arrive at a desired location on each of the candidate travel routes contained in the candidate travel route information generated by the route processor 188. Then, the traffic-congestion recognizer 187 predicts the condition of the traffic-congestion at the desired location on each of the candidate travel routes at the predicted arrival time on the basis of the time-series data 12i acquired in step S208 and generates traffic-congestion prediction information about the predicted condition of the traffic-congestion.

Based on the current traffic-congestion information and the traffic-congestion prediction information, the route processor 188 of the processor 180 performs the route setting processing of the step S206 for travel route selection so as to select some of the candidate travel routes contained in the candidate travel route information. In the route setting processing, the travel routes may be selected base only on the traffic-congestion prediction information. Then, the route processor 188 estimates the time required to arrive at the destination for each of the selected travel routes to generate required time information, and the display controller 184 makes the terminal display 140 display the calculated candidate travel routes and an indication for prompting the user to select a travel route. The user selects and inputs the travel route information about any one of the route, and thus the travel route is set. If only one route is set, that route is set as the travel route without displaying the instruction to demand the selection.

The processor 180 then controls the terminal display 140 by the display controller 184 to navigate the vehicle with the acquired map information displayed (step S209). At this navigation process, the processor 180 acquires the matching data MM from the storage 160. Then, the coordinate matching section 186 performs a coordinate matching processing on the acquired matching data MM for recognizing the arrangement of roads, or the connection of roads, and the memory 170 stores it. Further, the processor 180 displays on the map information an icon 184A7 representing the current position of the vehicle based on the current position information as well as a traffic condition indicator C representing the contents of the traffic information such as the travel route information about the travel route selected by the user, the traffic-congestion prediction information, the required time information and the current traffic-congestion information. Note that, "a", "b" and "c" in Figs. 7 and 8 indicate spots on the road.

Subsequently, the processor 180 recognizes the traveling condition of the vehicle based on the data output from the speed sensor, the azimuth sensor and the acceleration sensor of the sensor 110 and the GPS data output from the GPS receiver. Further, the processor 180 provides the guidance information by the guidance providing section 183 for navigating the travel of the vehicle with the display on the terminal display 140 or with the sound output by the sound output section 150 on the basis of the recognized traveling condition and the route guidance information contained in the travel route information.

More specifically, the display controller 184 of the processor 180 interconnects the nodes N in the matching mesh information MMx acquired from the storage 160 with a polyline and performs a polyline processing on the basis of the arrangement of roads described in the link string block information of the matching data MM so as to display the roads in the area of the matching mesh information MMx containing the travel route on the terminal display 140. Then, under the control of the display controller 184, the terminal display 140 superimposes the name information VMxA and the background information VMxC that are miscellaneous element data about the elements of the map excluding roads in the area corresponding to the matching mesh information MMx of the display mesh information VMx acquired from the storage 160. Then, the current-position is superimposed on the displayed map.

In the step of superimposing the current-position, the map matching processing is performed on the basis of the matching data MM to prevent an indication representing the current-position information of the vehicle from being located off the displayed road. Namely, the processor 180 appropriately corrects the current-position information to locate the displayed current-position on the travel route in the matching data MM. Thus the current-position is displayed on the link string connecting links L. In this way, the current-position is superimposed on the map for providing the navigation. When the current-position reaches the predetermined position, guidance on the traveling direction and the like are provided in visual or audio form. While the coordinate matching processing is performed at the time of acquiring the matching data MM in step S209 in the above description, the coordinate matching processing may alternatively be performed at the time of or before performing the map matching processing.

When the terminal input section 130 is operated to display a map of other areas, the map will be displayed based on the display mesh information VMx acquired from the storage 160 as in the case of the display operation based on the retrieval.

Additionally, in the navigating processing, when the traffic-congestion recognizer 187 recognizes a signal (step S901) for requesting the notification of information on the traffic-congestion condition, or the traffic condition when a predetermined time has elapsed, for instance, an hour as shown in Fig. 12 in response to the input operation of the user by the terminal input section 130, the traffic-congestion recognizer 187 generates the prediction traffic-congestion information when an hour has elapsed. Further, the route processor 188 calculates the predicted position at which the vehicle arrives when an hour has elapsed based on the map information, the current traffic information and the predicted traffic information (step S902). The display controller 184 then determines whether or not the area including the predicted position calculated in step S902 and the current position are included in the display area of the current map information 184A1, 184B1 currently displayed (step S903), in other words, determines whether or not the area where the vehicle can drive in an hour can display with the use of the map information with the same scale.

In step S903, when determining that the area where the vehicle can drive when an hour has passed is included in the area where the current map information 184A1, 184B1 is displayed, the display controller 184 superimposes the indicator C about the prediction traffic-congestion information on the map information having the same map scale as the current map information 184A1, 184B1 to generate the prediction map information 184A3, 184B3. At this time, an icon representing the predicted position of the vehicle can be displayed thereon. The display controller 184 generates a screen on the terminal display 140 so that the current map information 184A1,184B 1 and the prediction map information 184A3, 184B3 are displayed in parallel, for instance, as shown in Fig. 8 by using a predetermined display form stored in the storage 160 for instance. Namely, the display screen is so arranged that the current map information 184B1 is displayed on the first display area 184B2 of the display form while the prediction map information 184B3 is displayed on the second display area 184B4. Further, the display controller 184 displays the text data 184B5 such as "current status display" indicating the current map information on the text box adjacent to the first display area 184B2, while displays the text data 184B6 such as "1-hour-later prediction data display" indicating the prediction map information 184B3 on the text box adjacent to the second display area 184B4, to generate a screen information 184B. The display controller 184 then controls the terminal display 140 to display the generated screen information 184B (step S904), and ends the processing for notifying the current traffic condition and the traffic condition when an hour has passed, or a predetermined period of time.

On the other hand, in step S903, when determining that the area where the vehicle can drive an hour later is not included in the area displaying the current map information 184B1, in other words, the area where the vehicle can drive an hour later exceeds the area displaying the current map information, the display controller 184 acquires the map information with the map scale including the area where the vehicle can drive an hour later. The display controller 184 then superimposes the indicator C about the prediction traffic-congestion information on the acquired map information, and an icon indicating the predicted position of the vehicle if necessary, as well as the area indicator 184A9 representing the area where the vehicle can drive an hour later, or the area indicator representing the area displaying the current map information, to generate the prediction map information 184B3 (step S905). In step S904, the display controller 184, as described above, generates the screen information 184B in which the current map information 184B1 and the generated prediction map information 184B3 with the map scale different from that of the current map information 184B1 are displayed on the terminal display 140 in parallel, by the dual-screen using the predetermined display form.

For instance, when the user prefers to recognize the traffic condition of an area ahead in the driving direction of the vehicle, the display controller 184 shifts the area to be displayed, or displays the new area according to the setting that shifts the area where the current map information 184A1, 184B1 or the prediction map information 184A3, 184B3 with a predetermined input operation by the terminal input section 130. When shifting the display area of either the current map information 184A1, 184B1 or the prediction map information 184A3, 184B3, the display controller 184 also shifts the display area of the other one, i.e. either the prediction map information 184A3, 184B3 or the current map information 184A1, 184B1 synchronously.

In this way, with the use of the dual-screen, the user determines the traffic condition, for instance, when the user determines that the appropriately smooth driving may not be realized due to the traffic-congestion ongoing or generating, the user modifies the travel route to search a new travel route again, namely, performs an input operation by the terminal input section 130 for requesting the reroute processing. In the same manner as the setting of the travel route, candidate travel route information is generated to the destination requiring the shortest period of time or the shortest traveling distance by using the current traffic-congestion information and the traffic-congestion prediction information for instance, and the navigation is performed again based on the travel route with the desired setting.

Further, when the user recognizes the predicted traffic condition at an predetermined area, such as an area around the destination, irrespective of the setting of the travel route, the current traffic condition is also notified as shown in Fig. 13. More specifically, when the user performs a predetermined input operation by the terminal input section 130 for requesting the notification of the predicted traffic condition at a predetermined area, the display controller 184 displays on the terminal display 140 the indication prompting the input operation for determining which area needs to be notified with the predicted traffic condition according to the form previously stored in the storage 160 for instance. When the user performs the input operation to determine the area in accordance with this indication (step S911), the traffic-congestion recognizer 187 acquires VICS data about traffic-congestions, traffic accidents, constructions, traffic controls and weather information around the area (step S912).

The display controller 184 then displays on the terminal display 140 the indication prompting the input operation of the predicted time such as the time to be predicted at a desired area or the time elapsed from the current point of time according to the form previously stored in the storage 160 for instance. When the user inputs the predicted time according to this display (step S913), the display controller 184 acquires the map information including the predetermined area acquired in step S911 (step S914). The traffic-congestion recognizer 187 then generates the traffic prediction information at the predicted time acquired in step S913 at the area and its vicinity previously set, in the manner described above (step S915). The display controller 184 superimposes the current traffic information at the current time acquired in step S912 on the map information acquired in step S914 to generate the current map information 184A1, 184B1, and also superimposes the traffic-congestion prediction information acquired in step S915 on the map information acquired in step S914 to generate the prediction map information 184A3, 184B3. After this process, in the same manner as the above-described step S904, by using the display form as shown in Fig. 7, the display controller 184 displays the current map information 184A 1 and the prediction map information 184A3 in parallel by the dual-screen, and also superimposes the current time icon 184A5 and the elapsed time icon 184A6 respectively on the current map information 184A1 and the prediction map information 184A3.

### [Advantages of First Embodiment]

In the first embodiment described above, based on the VICS data about the traffic condition, and the traffic information such as the current traffic-congestion information and the traffic-congestion prediction information recognized by the traffic-congestion recognizer 187, the display controller 184 generates the current map information 184A1, 184B1 in which the traffic condition in the predetermined area at the current time clocked by the timer 191 is superimposed on the map information in the predetermined area, and the prediction map information 184A3, 184B3 in which the predicted traffic condition when the predetermined time has elapsed as clocked by the timer 191 is superimposed on the map information in the predetermined area. The display controller 184 then displays the generated current map information 184A1, 184B1 and the prediction map information 184A3, 184B3 on the terminal display 140 so that they are displayed in parallel on a single display area of the terminal display 140. Therefore, the changes in the traffic condition can easily be recognized. For example, it can easily be determined whether the user continues to drive or avoids the problem, and if avoids, which route will be taken etc, so that the traffic condition may appropriately be notified to the user. Thereby, a appropriately smooth navigation can be provided.

Further, as shown in Fig. 8, the predicted position of the vehicle at the predicted time during the travel route search is calculated, and the prediction map information 184A3, 184B3 is generated by using the map information with the map scale including the predicted position. Therefore, the user can easily recognize the relationship especially between the self position and the predicted traffic condition at the predicted time, so that the traffic condition may appropriately be notified to the user.

The icon 184A8 indicating the predicted position of the vehicle is superimposed. Therefore, the user can further easily recognize the traffic condition by notifying the relationship between the self position and the predicted traffic condition.

By calculating the prediction traffic information on the travel route, the information amount of the prediction traffic information to be calculated can be restricted, the processing load can be reduced, the processing speed can easily be increased, the prediction map information can promptly be displayed, and the usability can easily be enhanced on account of the preferable notification. Additionally, since the prediction traffic information is acquired even for other travel routes from the self position to the destination in addition to the prediction traffic information on the travel route, the user can easily determine avoidance, the traffic condition can appropriately be notified, the additional prediction traffic information will not be required at the reroute processing, and the reroute processing can easily be speeded up.

When the display exceeds the area for displaying the current map information 184A1, 184B1, the area indicator 184B9 corresponding to the range where the vehicle can travel in the elapsed time up to the predicted time is superimposed on the prediction map information 184A3, 184B3. Therefore, the user can easily recognize the relationship between the position of the vehicle and the predicted traffic condition, so that the traffic condition may further appropriately be notified to the user.

The predicted traffic condition is recognized at the area where the vehicle can travel in the elapsed time up to the predicted time is recognized, and the recognized predicted traffic condition is then superimposed on the map information as the prediction map information 184A3, 184B3. Therefore, a predicted traffic condition is not necessary to be calculated for other areas, the processing load can be reduced, the processing speed can easily be increased, the prediction map information 184A3, 184B3 can promptly be displayed and the usability can easily be enhanced on account of the preferable notification.

Further, the current time icon 184A5 as shown in Fig. 7 indicating the traffic condition at the current time as well as the text box for displaying the text data 184B5 as shown in Fig. 8 are superimposed on the current map information 184A1, 184B1. Similarly, the elapsed time icon 184A6 as shown in Fig. 7 indicating the traffic condition after the predetermined time has elapsed as well as the text box for displaying the text data 184B6 as shown in Fig. 8 are superimposed on the prediction map information 184A3, 184B3. Therefore, the current traffic condition and the predicted traffic condition can easily be recognized by the user.

For instance, when the user prefers to recognize the traffic condition of an area ahead in the driving direction of the vehicle, the display controller 184 shifts the area to be displayed, or displays the new area according to the setting that shifts the area where the current map information 184A1, 184B1 or the prediction map information 184A3, 184B3 with a predetermined input operation by the terminal input section 130. Therefore, the user can easily recognize the traffic condition of the vicinity and the predicted traffic condition.

Further, when shifting the display area of either the current map information 184A1, 184B1 or the prediction map information 184A3, 184B3, the display controller 184 also shifts the display area of the other one, either the prediction 184A3, 184B3 or the current map information 184A1, 184B1 synchronously. Therefore, when the traffic condition of the vicinity and the predicted traffic condition are recognized, the current traffic condition as well as the predicted traffic condition can be recognized as one set only by one operation, thus easily recognizing the traffic condition of the present and the future.

The traffic-congestion prediction information is generated using the traffic-congestion prediction table 10 containing the statistical traffic information obtained by statistically processing traffic conditions in the past. Therefore, the processing load is lower than that for predicting the traffic-congestion using a special simulation program, and hence the traffic-congestion prediction for every predetermined time can quickly be calculated. In other words, the transition of the traffic-congestion can quickly be notified based on the traffic-congestion prediction, thereby easily providing the effective navigation.

The calendar template 20 is provided so that the traffic-congestion prediction table 10 is associated with the dates in the calendar template 20. In other words, the changeable classification ID number corresponding to the date classification ID 11 contained in the traffic-congestion prediction table 10 is associated with the date information about the date of the calendar. Accordingly, the traffic-congestions can be properly predicted using the traffic-congestion prediction table 10 containing the past data, thereby providing effective navigation. The date of the calendar template 20 is associated with the changeable classification ID number related to the traffic-congestion prediction table. Therefore, if the predicted traffic condition and the actual traffic condition have discrepancies, it is only necessary to change the classification ID number corresponding to the time-series data contained in the traffic-congestion prediction table corresponding to the current status, thereby properly predicting the traffic-congestion.

### [Second Embodiment]

Now, a second embodiment of the present invention will be described with reference to the attached drawings. A communication navigation system of this embodiment is an example of a traffic condition notifying system of the present invention, and so designed to navigate a movable body (e.g. a vehicle) for the driving as the traveling condition thereof. As in the case of the first embodiment, the traffic condition notifying system of the present invention is not necessarily designed to navigate a vehicle for the drive thereof, but may be so designed to notify traffic information regarding any types of movable body.

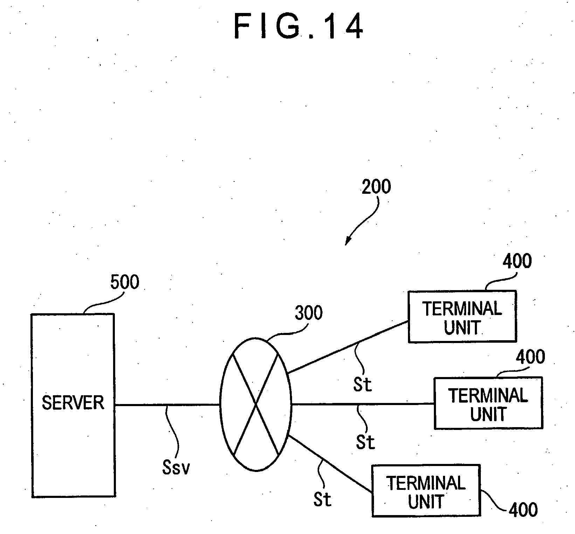

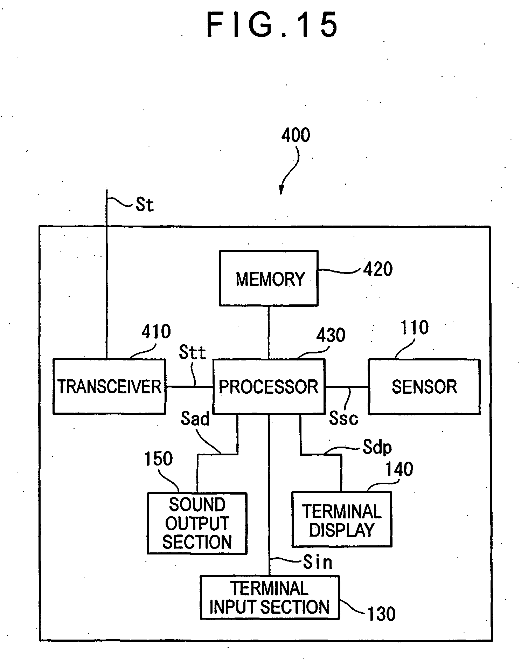

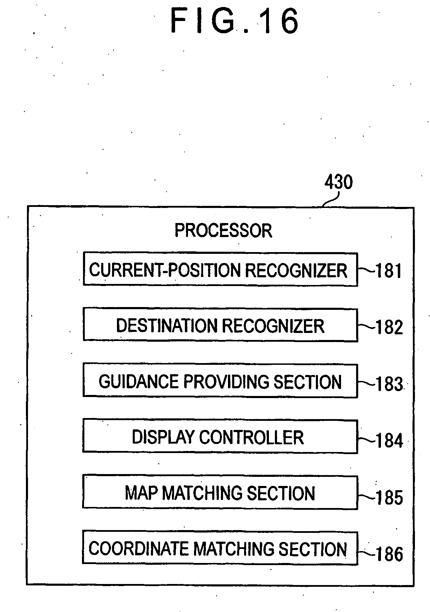

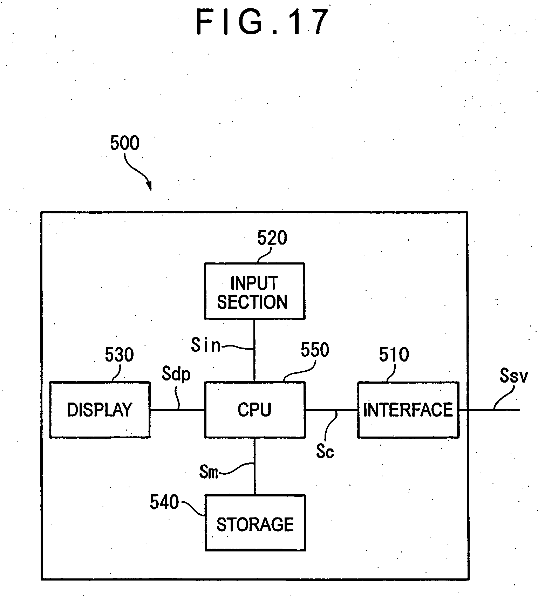

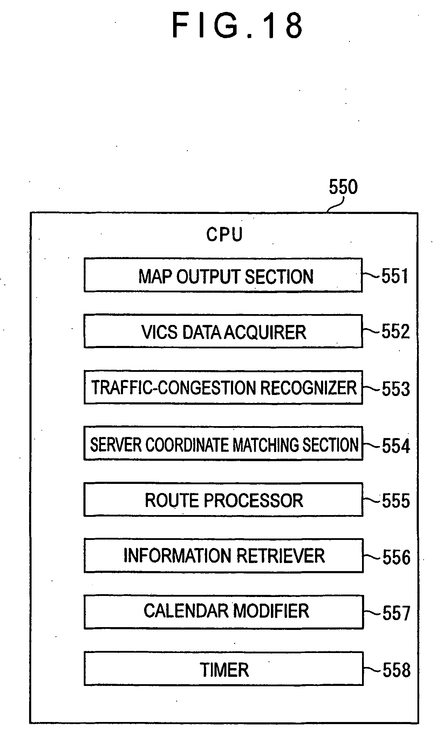

Fig. 14 is a block diagram showing the brief configuration of the navigation system according to the present embodiment. Fig. 15 is a block diagram showing the brief configuration of a terminal unit. Fig. 16 is a block diagram showing the brief configuration of a processor of the terminal unit. Fig. 17 is a block diagram showing the brief configuration of a server. Fig. 18 is a block diagram showing the brief configuration of a CPU of the server. The components same as those in the first embodiment are denoted respectively by the same reference symbols and will not be described any further.

### [Configuration of Navigation System]

Referring to Fig. 12, the reference numeral 200 denotes the communication navigation system (traffic condition notifying system). The navigation system 200 notifies guidance on a travel along with a traveling condition of a movable body (e.g. a vehicle). The movable body is not limited to a vehicle, but includes any types of movable body such as an aircraft and a ship. The navigation system 200 has a network 300, a terminal unit 400 as a traffic condition notifying device, and a server 500.

The network 300 is connected to the terminal unit 400 and the server 500. The network 300 interconnects the terminal unit 400 and the server 500 to enable the communication therebetween. The network 300 may be Internet based on a general-purpose protocol such as TCP/IP protocol, an intranet, a LAN (Local Area Network), a communication network and a broadcasting network that have a plurality of base stations capable of communicating by way of a radio medium, or the radio medium itself that enables direct communication between the terminal unit 400 and the server 500. The radio medium may be any one of electric waves, light beams, acoustic waves and electromagnetic waves.

Like the navigation device 100 of the first embodiment, the terminal unit 400 may be, for example, an in-vehicle unit installed in a vehicle as a movable body, a portable unit, a PDA (Personal Digital Assistant), a mobile phone, a PHS (Personal Handyphone System) or a portable personal computer. The terminal unit 400 acquires map information delivered by the server 500 over the network 300. On the basis of the map information, the terminal unit 400 searches for and displays information about a current-position and a destination, a route to the destination, predetermined shops nearby, and information about services offered by the shops. As shown in Fig. 13, the terminal unit 400 includes a transceiver 410 that operates as a terminal communication section, a sensor 110, a terminal input section 130 as a request information generator, a terminal display 140, a sound output section 150, a memory 420, a processor 430 and so on.

The transceiver 410 is connected to the server 500 over the network 300, and also connected to the processor 430. The transceiver 410 can receive a terminal signal St from the server 500 over the network 300. When acquiring the terminal signal St, the transceiver 410 performs a preset input interface processing so as to output the terminal signal St as a processing terminal signal Stt to the processor 430. The transceiver 410 can also input the processing terminal signal Stt from the processor 430. When acquiring the processing terminal signal Stt to be input, the transceiver 410 performs a preset output interface processing so as to send the processing terminal signal Stt as the terminal signal St to the server 500 over the network 300.

The sensor 110 detects the traveling condition of the vehicle, or the current-position and the driving status, and outputs it as a predetermined signal Ssc to the processor 430.

The terminal input section 130 has various operation buttons and operation knobs (not shown) to be used for input operations. The operation buttons and the operation knobs are used to input, for example, the settings for the operations of the terminal unit 400. More specifically, they may be used: to issue an instruction for executing a communication operation as an communication request information for acquiring information over the network 300; to set the type of information to be acquired and acquiring criteria; to set a destination; to retrieve information; and to display the driving status (traveling condition) of the vehicle; and to modify the expressions and the area to be displayed. When the settings are input, the terminal input section 130 outputs a predetermined signal Sin to the processor 430 so as to apply the settings.

The terminal display 140, under the control of the processor 430, displays a signal Sdp representing image data sent from the processor 430. The image data may be image data of the map information and the retrieval information sent from the server 500.

The sound output section 150, under the control of the processor 430, outputs and notifies various signals Sad as sounds from a sound generator. The various signals Sad represent the sound data etc. from the processor 430.

The memory 420 appropriately stores various information acquired over the network 300, the settings that are input by the terminal input section 130, music data, image data and the like. The memory 420 also stores various programs that run on the OS (Operating System) controlling the whole operation of the terminal unit 400. The memory 420 may include drives or drivers for readably storing data on a recording medium such as a HD (Hard Disk) or an optical disk.

The processor 430 has various input/output ports (not shown) including a communication port connected to the transceiver 410, a GPS receiving port connected to a GPS receiver of the sensor 110, sensor ports respectively connected to various sensors of the sensor 110, a key input port connected to the terminal input section 130, a display control port connected to the terminal display 140, a sound control port connected to the sound output section 150 and a storage port connected to the memory 420. As shown in Fig. 18, the processor 430 has various programs such as a current-position recognizer 181 that operates as a current-position information acquirer, a destination recognizer 182 that operates as a destination information acquirer, a guidance providing section 183, a display controller 184, a map matching section 185, a coordinate matching section 186 and so on.

The current-position recognizer 181 recognizes the current-position of the vehicle. Various information acquired by the current-position recognizer 181 are appropriately stored in the memory 420.

The destination recognizer 182, for instance, acquires the destination information about the destination set by the input operation at the terminal input section 130 and recognizes the position of the destination. Such destination information recognized by the destination recognizer 182 is appropriately stored in the memory 420.

The guidance providing section 183 provides guidance stored in the memory 420 on the basis of travel route information and feature guidance information acquired in advance according to the driving status of the vehicle. The guidance is related to the travel of the vehicle, for instance, the contents for assisting the drive of the vehicle.

The display controller 184, in the same manner as the first embodiment, notifies various information by displaying it on the terminal display 140, and displays the current map information 184A1, 184B1 and the prediction map information 184A3, 184B3 by a dual-screen.

The map matching section 185 performs the map matching processing for displaying the current-position recognized by the current-position recognizer 181 based on the map information obtained from the server 500.

The coordinate matching section 186 performs the coordinate matching processing for determining if point information about nodes N contained in the matching data MM of the map information acquired from the server 500 indicate an identical point or not.

The server 500 can communicate with the terminal unit 400 over the network 300. The server 500 is capable of acquiring various information from other servers (not shown) of various government offices such as Meteorological Agency and National Police Agency, private organizations, VICS and business enterprises over the network 300. The information to be acquired may be travel information for the vehicle, i.e., various travel related information used during the travel of the vehicle such as weather information, VICS data including traffic-congestions, traffic accidents, constructions, traffic controls, and shop information about various shops including gasoline stations and restaurants etc. As shown in Fig. 17, the server 500 includes an interface 510 that operates as a current-position information acquirer and a destination information acquirer, an input section 520, a display 530, a storage 540, a CPU (Central Processing Unit) 550 and so on.

The interface 510 performs a preset input interface processing over a server signal Ssv input over the network 300 so as to output the server signal Ssv as a processing server signal Sc to the CPU 550. When the processing server signal Sc to be transmitted from the CPU 550 to the terminal unit 400 is input in the interface 510, the interface 510 performs preset output interface processing over the input processing server signal Sc so as to output the processing server signal Sc as a server signal Ssv to the terminal unit 400 over the network 300. Note that the server signal Ssv can be appropriately output only to a predetermined terminal unit 400 on the basis of the information described in the processing server signal Sc.

Like the terminal input section 130, the input section 520, which may be a keyboard, a mouse or the like, has various operation buttons and operation knobs (not shown) to be used for input operations. The operation buttons and the operation knobs are used: to input the settings for operations of the server 500; to set information to be stored in the storage 540; and to update the information stored in the storage 540. When the settings are input, the input section 520 outputs a signal Sin corresponding to the setting to the CPU 550 so as to apply the settings. In place of the operation buttons and the operation knobs, the input section 520 may include a touch panel that may be arranged at the display 530 for input operations and a sound input section for the input operations thereof as long as various settings can be input.

The display 530, just like the terminal display 140, displays a signal Sdp representing image data sent from the CPU 550 under the control of the CPU 550. The image data may be those acquired from the storage 540 and those acquired from external servers over the network 300.

The storage 540 readably stores various information received from the terminal unit 400 and external servers such as map information shown in Figs. 2 and 3 and a traffic-congestion prediction table 10 as shown in Fig. 4. The storage 540 also readably stores the calendar template 20 associated with the terminal units 400 connected to the server 500 over the network 300 as shown in Fig. 5. More specifically, although not shown, the storage 540 has a various information storage area for storing various information, a map information storage area that operates as a map information storage for storing map information, a traffic-congestion prediction table storage area that operates as a statistical traffic information storage for storing the traffic-congestion prediction table 10 and a calendar storage area for storing the calendar template 20.

While the storage 540 has the above-mentioned four storage areas in this embodiment, the storage 540 may not have any of the above-mentioned storage areas, or may have additional storage areas. The storage 540 may include drives or drivers for readably storing data on a recording medium such as a HD (Hard disks), a DVD (Digital Versatile Disk), an optical disk and a memory card. Information to be stored may include, for example, information input by the input operation at the input section 520, and the contents of the information stored with the input operation can be appropriately updated. The storage 540 also stores information such as various programs that run on an OS (Operating System) controlling the whole operation of the server 500 and the navigation system 200.

The storage 540, for instance, stores the retrieval information for acquiring information of a predetermined point in the map information. More specifically, the retrieval information provided upon the retrieval request from the terminal unit 400 includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The storage 540 stores personal information about users who use the navigation system 200 with the terminal unit 400. The personal information may include a name and an address, a user ID number and a password assigned to each user, a type of the terminal unit 400 for the use of the navigation system 200, and an address number of the terminal unit 400 used for communicating with the terminal unit 400. Furthermore, the storage 540 stores various information used for performing the navigation processing in a manner readable by the CPU 550.

As shown in Fig. 18, the CPU 550 has various programs stored in the storage 540 such as a map output section 551, a VICS data acquirer 552 that operates as a traffic information acquirer, a traffic-congestion recognizer 553 that operates also as a traffic information acquirer, a server coordinate matching section 554, a route processor 555 as a map information acquirer, a request information acquirer, a notification map generator and a travel route searcher, an information retriever 556, a calendar modifier 557, a timer 558 and so on.

The map output section 551 responds to the input of the processing server signal Sc to refer to the information requesting a distribution of the information about the map information contained in the processing server signal Sc, and retrieves the requested information from the map information stored in the storage 540, e.g., the display data VM and matching data MM corresponding to a predetermined area to read it out as the memory signal Sm. The map output section 551 appropriately converts the read memory signal Sm into a processing server signal Sc, outputs the processing server signal Sc to a predetermined or all terminal units 400 via the interface 510 and the network 300 on the basis of the processing server signal Sc, and distributes the requested information contained in the map information.

The VICS data acquirer 552, just like the VICS receiver 120 of the first embodiment, responds to the input of the processing server signal Sc and refers to the information about the request for the travel route search contained in the processing server signal Sc so as to acquire the VICS data from the VICS (not shown).

The traffic-congestion recognizer 553 responds to the input of the processing server signal Sc and refers to the information about the request for the travel route search contained in the processing server signal Sc so as to generate current traffic-congestion information as the memory signal Sm based on the VICS data acquired by the VICS data acquirer 552. Also, the traffic-congestion recognizer 553, just like the traffic-congestion recognizer 187, responds to the input of the processing server signal Sc and refers to and the information about the request for the travel route search concerning with the traffic-congestion information and the traffic-congestion prediction contained in the processing server signal Sc so as to generate traffic-congestion prediction information as the memory signal Sm. Then, the traffic-congestion recognizer 553 appropriately converts the generated memory signal Sm into a processing server signal Sc, outputs the processing server signal Sc to a predetermined or all terminal units 400 via the interface 510 and the network 300 on the basis of the processing server signal Sc, and notifies the current traffic-congestion condition and the predicted traffic-congestion that might occur before the arrival to the destination.

The server coordinate matching section 554, just like the above-described coordinate matching section 186 of terminal unit 400, performs the coordinate matching processing for determining if point information about nodes N contained in the matching data MM of the map information indicate an identical point or not.

The route processor 555, just like the route processor 188 of the first embodiment, responds to the input of the processing server signal Sc and refers to the information about the request for the travel route search contained in the processing server signal Sc so as to generate travel route information and required time information as the memory signal Sm. Then, the route processor 555 appropriately converts the generated memory signal Sm into a processing server signal Sc, outputs the processing server signal Sc to a predetermined or all terminal units 400 via the interface 510 and the network 300 on the basis of the processing server signal Sc, and notifies the travel route and the required time. The route processor 555, in the same manner as the display controller 184 in the first embodiment, generates the current map information 184A1, 184B1 and the prediction map information 184A3, 184B3, and generates the screen information 184A, 184B based on the predetermined display form to be displayed on the terminal display 140 by a dual-screen.

The information retriever 556, just like the information retriever 189 of the first embodiment, responds to the input of the processing server signal Sc and refers to the information about the retrieval request for the retrieval information contained in the processing server signal Sc so as to hierarchically retrieve the retrieval information stored in the storage 540 typically on the basis of item information and read it as the memory signal Sm. Then, the information retriever 556 appropriately converts the generated memory signal Sm into a processing server signal Sc, outputs the processing server signal Sc to a predetermined or all terminal units 400 via the interface 510 and the network 300 on the basis of the processing server signal Sc, and delivers the retrieval information.

The calendar modifier 557 responds to the input of the processing server signal Sc and recognizes information contained in the processing server signal Sc, which may be calendar-modification request information requesting the modification of the calendar template 20 and terminal-specific information such as ID numbers for identifying a terminal unit 400 that has generated the calendar-modification request information. Then, the calendar modifier 557, just like the calendar modifier 190 of the first embodiment, appropriately updates the calendar template 20 stored in the storage 540 and associated with the terminal unit 400 identified by the terminal-specific information stored in the storage 540.

The timer 558 recognizes the current time typically based on the reference pulse of an internal clock. Then, the timer 558 appropriately outputs time information about the recognized current time.

The CPU 550 responds to the signal Sin input from the input section 520 by the input operation at the input section 520, and appropriately performs calculation based on the contents corresponding to the input operation to appropriately generate a signal Sdp and the like. Then the CPU 550 appropriately outputs the generated various signals to the display 530, the interface 510 and the storage 540 and operates them so as to execute the input contents.

### [Operation of Navigation System]

Now, the operation of the navigation system 200 will be described with reference to the attached drawings. The processing that is substantially the same as those of the first embodiment will be described only briefly.

### (Calendar Template Modifying Process)

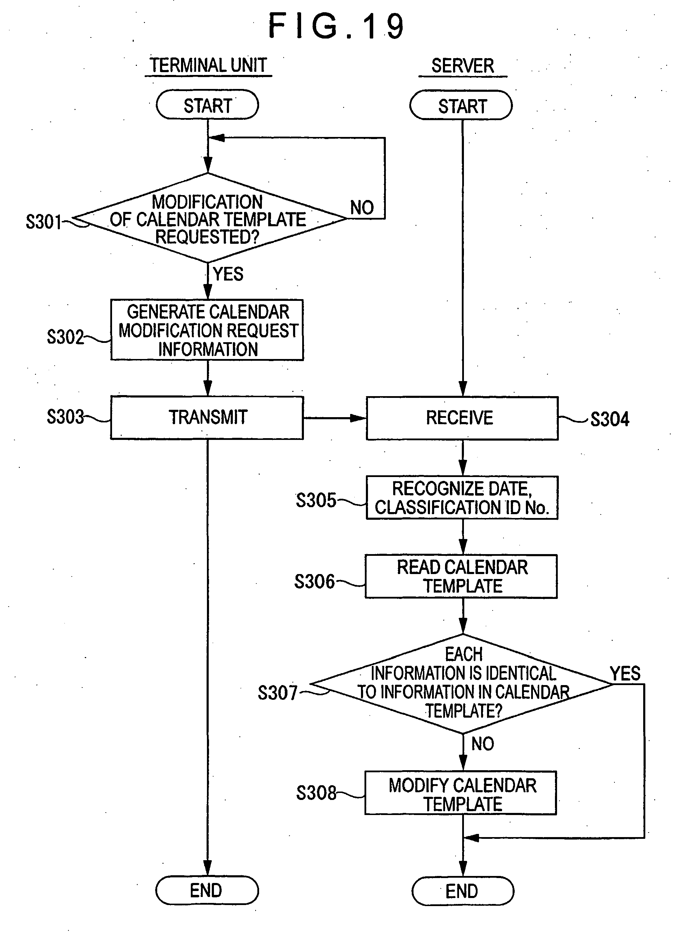

Firstly, the processing for modifying the calendar template 20 as one of the operations of the navigation system 200 will be described with reference to Fig. 19. Described herein is the processing for modifying the calendar template 20 as shown in Fig. 5 stored in the storage 540 of the server 500 based on the information about, for example, a festival scheduled on 5th in City A, that a user have acquired via the radio or TV broadcastings. Fig. 19 is a flowchart showing the processing for modifying a calendar template.

Firstly, the user in the vehicle switches on the terminal unit 400 to supply the power thereto. When the power is supplied, the processor 430 controls the terminal display 140 to display a main menu and a screen for prompting the user to set a specific operation to be executed by the terminal unit 400.

Then, as shown in Fig. 19, the user operates the terminal input section 130 to set a command for modifying the calendar template 20. When the processor 430 recognizes the set command for modifying the calendar template 20 at the calendar modifier 557 (step S301), it makes the terminal display 140 display a screen for prompting the user to set the date information and event information necessary for modifying the calendar template 20.

When the user sets the date information and the event information by operating the terminal input section 130 following the instructions on the displayed screen, the processor 430 recognizes the set date information and the event information. Then, the processor 430 generates calendar-modification request information containing the recognized date information and event information (step 5302), and the transceiver 410 transmits the generated calendar-modification request information to the server 500 over the network 300. When transmitting the calendar-modification request information, the transceiver 410 also transmits the terminal-specific information for identifying the terminal unit 400 (step S303).

When the server 500 receives the calendar-modification request information and the terminal-specific information transmitted from the terminal unit 400 (step S304), the calendar modifier 557 recognizes the date information and the event information contained in the received calendar-modification request information (step S305). More specifically, the calendar modifier 557 recognizes the date specified according to the date information as 5th, and the classification ID number associated with the event information as "ID4".

Thereafter, the calendar modifier 557 reads out the calendar template 20 associated with the terminal unit 400 that has transmitted the calendar-modification request information on the basis of the terminal-specific information received in step S304 (step S306). Then, the calendar modifier 557 determines if the various information recognized in step S305 are identical to the information contained in the calendar template 20 read in step S306 or not (step S307).

If the calendar modifier 557 determines in step S307 that the information are identical, it ends the processing without modifying the calendar template 20. If, on the other hand, the calendar modifier 557 determines that the information are not identical, it modifies the calendar template 20 on the basis of the various information recognized in step S305 (step S308). More specifically, since the classification ID number of the 5th recognized in step S305 is "ID4" and the classification ID number of the 5th recognized based on the calendar template 20 is "ID1", the calendar modifier 557 modifies the classification ID number of the 5th from "ID1" to "ID4" as shown in Fig. 9. Then, the calendar modifier 557 associates the calendar template 20 containing the modified classification ID number with the terminal unit 400 that has transmitted the calendar-modification request information, stores it in the storage 540, and ends the processing.

### (Processing for Travel Route Search)

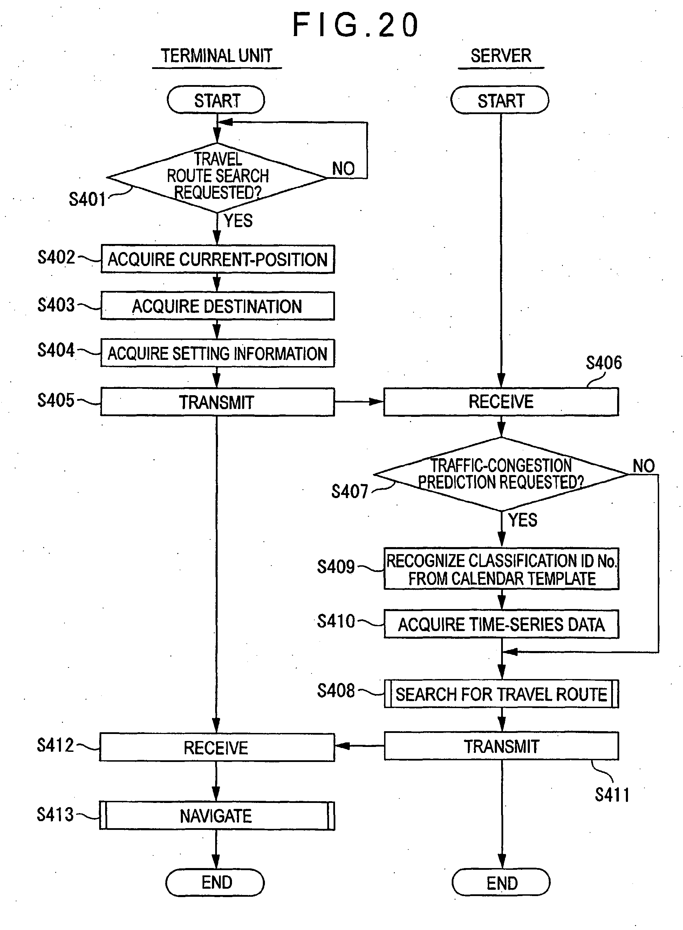

Now, the processing for travel route search as one of operations of the navigation system 200 will be described with reference to Fig. 20. Fig 20 is a flowchart showing the processing for travel route search in the navigation system.

Firstly as shown in Fig. 20, the user operates the terminal input section 130 to set a command for searching for a travel route. When the processor 430 recognizes the set command for searching for a travel route (step S401), the processor 430 makes the terminal display 140 display a screen for prompting the user to set various information necessary for travel route search such as the destination, the setting information about the preference for shortest travel distance or shortest travel time and the necessity of traffic-congestion prediction.

When the processor 430 recognizes the various information necessary for the travel route search by the route processor 555, the current-position recognizer 181 acquires the current-position information about the current-position (step S402) and the destination recognizer 182 recognizes the destination information about the set destination (step S403). The processor 430 also acquires the setting information about the settings that have been input (step S404). The acquired current-position information, the destination information and the setting information are appropriately stored in the memory 420.

Thereafter, the processor 430 controls the transceiver 410 to transmit the current-position information, the destination information and the setting information stored in the memory 420 as well as a signal requesting the travel route search to the server 500. When transmitting the various information, the transceiver 410 also transmits the terminal-specific information for identifying the terminal unit 400 (step S405).

When the server 500 receives the various information transmitted from the terminal unit 400 by the interface 510 through the network 300 (step S406), the route processor 555 of the CPU 550 determines if the received setting information contains a traffic-congestion prediction request information or not (step S407).

If the route processor 555 of the CPU 550 determines in step S407 that the traffic-congestion request information is not contained, the VICS data acquirer 552 acquires the VICS data. Then, the traffic-congestion recognizer 553 of the CPU 550 generates current traffic-congestion information of an area containing the current-position and the destination based on the acquired VICS data. Thereafter, based on the current-position information, destination information, the setting information and the current traffic-congestion information, the route processor 555 of the CPU 550 executes a route search processing to search for the travel route from the current-position of the vehicle to the destination (step S408).

More specifically, the route processor 555 generates some pieces of the travel route information that meet the requirements of the user, using the map information stored in the storage 540. Then, the route processor 555 estimates the time required to arrive at the destination for each of the selected travel routes to generate required time information as in the case of the first embodiment.

If, on the other hand, the route processor 555 determines in step S407 that the traffic-congestion prediction request information is contained, the route processor 555 acquires the time information from the timer 558 and recognizes the current date based on the acquired time information. Then, the traffic-congestion recognizer 553 of the CPU 550 reads out the calendar template 20 associated with the terminal unit 400 that has requested the travel route search from the storage 540 on the basis of the terminal-specific information received in step S406. Thereafter, the traffic-congestion recognizer 553 retrieves and recognizes the classification ID number of the recognized date based on the read calendar template 20 (step S409). Then, it recognizes the current-position and the destination based on the current-position information and the destination information received in step S406. Additionally, the traffic-congestion recognizer 553 retrieves and acquires the time-series data 12i corresponding to the recognized classification ID number and containing the current-position and the destination from the traffic-congestion prediction table 10 stored in the storage 540 (step S410).

Thereafter, the CPU 550 performs the processing of the step S408. More specifically, the traffic-congestion recognizer 553 of the CPU 550 generates current traffic-congestion information. Based on the current-position information, destination information, setting information and current traffic-congestion information, the route processor 555 of the CPU 550 detects a plurality of travel routes and selects some of the travel routes on the basis of the acquired setting information to generate candidate travel route information about a plurality of candidate travel routes that meet the requirements of the user.

Further, the traffic-congestion recognizer 553 of the CPU 550 acquires the current time and day from the timer 558. Then, based on the current traffic-congestion information and the current time and day, the traffic-congestion recognizer 553 estimates the predicted arrival time to arrive at a desired location on each of the candidate travel routes contained in the candidate travel route information generated by the route processor 555. Additionally, the traffic-congestion recognizer 553 predicts the condition of the traffic-congestion at the desired location on each of the candidate travel routes at the predicted arrival time on the basis of the time-series data 12i acquired in step S410 and generates traffic-congestion prediction information about the predicted condition of the traffic-congestion.

Based on the current traffic-congestion information and the traffic-congestion prediction information, the route processor 555 of the CPU 550 selects some of the candidate travel routes contained in the candidate travel route information to generate travel route information about the selected travel routes that meet the requirements of the user, the condition of the current traffic-congestion and that of the predicted traffic-congestion. Then, the route processor 555 generates required time information for each of the travel routes contained in the travel route information.

After the step S408, the server 500 controls the interface 510 on the basis of the terminal-specific information received in step S406 and appropriately transmits the travel route information, the traffic-congestion prediction information, the required time information and the current traffic-congestion information obtained as a result of the route search processing to the predetermined terminal unit 400 together with the map information (step S411). It may acquire the matching data MM in advance on the basis of the current-position information on. The map information to be transmitted needs to include only the matching mesh information MMx of the matching data MM that contains the nodes N and the links L for the roads of the travel routes, the display mesh information VMx of the display data VM for other areas, the name information VMxA and the background information VMxC in the area corresponding to the matching mesh information MMx.

The processor 430 of the terminal unit 400 which has received the various information (step S412), in the same manner as the above-described first embodiment, navigates by displaying the acquired map information (step S413). During the navigation, the coordinate matching section 186 performs a coordinate matching processing on the acquired matching data MM for recognizing the arrangement of roads, or the connection of roads, and the memory 420 stores it. Under the control of the processor 430, the display controller 184 makes the terminal display 140 display the travel route information about, e.g., five candidate travel routes calculated by the server 500 and an indication for prompting the user to select a travel route. The user selects and inputs the travel route information about any one of the route, and thus the travel route is set.

Thereafter, under the control of the display controller 184 of the processor 430, the terminal display 140 superimposes an icon 184A7 indicating the current-position of the vehicle on the basis of the current-position information as well as the travel route information selected by the user, the traffic-congestion prediction information, the required time information and the current traffic-congestion information on the received map information. Subsequently, the processor 430 recognizes the traveling condition of the vehicle based on the various data output from the sensor 110. Note that, the information on the traveling condition of the vehicle is transmitted to the server 500 if necessary. Then, the guidance providing section 183 of the processor 430 provides the guidance information for guiding the travel of the vehicle in visual or audio form on the basis of the recognized traveling condition and the route guidance information contained in the travel route information. At the time of the navigation, when the server 500 acquires the request signal generated by the input operation by the terminal input section 130 of the terminal unit 400 for requesting the notification of the traffic condition at the predicted time or when the predetermined period of time has passed over the network 300, in the same manner as the above-described first embodiment, the route processor 555 of the server 500 generates the screen information 184A, 184B by displaying the current map information 184A1, 184B1 and the prediction map information 184A3, 184B3. The server 500 transmits the screen information 184A, 184B to the terminal unit 400 through the network 300, the display controller 184 of the terminal unit 400 displays the acquired screen information 184A, 184B on the terminal display 140 by a dual-screen to notify the information to the user.

As described above, in the same manner as the first embodiment, in response to the request from the user, the dual-screen including the current map information 184A1, 184B1 and the prediction map information 184A3, 184B3 is notified for performing the navigation. Additionally, at the time of the navigation, the server 500 performs the reroute processing if necessary, when recognizing the request on the reroute processing from the terminal unit 400, in the same manner as the first embodiment.

### [Advantages of Second Embodiment]

As described above, in the second embodiment, when the server 500 acquires over the network 300 the request signal generated by the input operation for requesting notification of the traffic condition at the predicted time or at the point of time when the predetermined period of time has passed both sent from the terminal unit 400, and the route processor 555 recognizes the acquisition of the signal, in the same manner as the first embodiment, the current map information 184A1, 184B1, in which the traffic condition of the predetermined area at the current time clocked by the timer 191 is superimposed on the map information of the predetermined area, and the prediction map information 184A3, 184B3, in which the predicted traffic condition of the predetermined area when the predetermined period of time has passed clocked by the timer 191 is superimposed on the map information of the predetermined area, are generated, based on the traffic information such as the VICS data, current traffic-congestion information, traffic-congestion prediction information about the traffic information recognized by the traffic-congestion recognizer 553. Then, the route processor 555 controls the terminal display 140 of the terminal unit 400 so that the generated current map information 184A1, 184B1 and the prediction map information 184A3, 184B3 are displayed substantially in parallel on the single display area, on which the terminal display 140 displays the information by the dual-screen, namely, the route processor 555 generates the screen information 184A, 184B on the basis of the predetermined display form. The server 500 transmits the screen information 184A, 184B to the terminal unit 400 over the network, the display controller 184 controls the terminal display 140 to display the screen information 184A, 184B, by the so-called dual-screen. Therefore, in the same manner as the first embodiment, the changes in the traffic condition can easily be recognized. For example, it can easily be determined whether the user continues to drive or avoids the problem, and if avoids, which route will be taken etc, thus notifying the traffic condition to the user appropriately. Thereby, an effective smooth navigation can be provided.

Further, since the route processor 555 of the server 500 generates in advance the screen information 184A, 184B according to the display form to be displayed by the dual-screen, the terminal unit 400 only requires to generate the screen information 184A, 184B and to cause the screen information 184A, 184B to be displayed. Since the processing load for controlling to display the information by the dual-screen in order to notify it to the user by the terminal unit 400 can be reduced, the configuration of the terminal unit 400 can be simplified, and the dual-screen can be displayed promptly, thus easily expanding the use thereof. Further, since the server 500 generates the screen information 184A, 184B, the timer 558 provided in the server 500 can synchronize the time of each of the terminal units 400, the predicted traffic condition can timely be notified, and the time keeping may be easy, thus enhancing the usability.

According to the second embodiment, the server 500 stores the map information and the traffic-congestion prediction table 10 used for the traffic-congestion predictions, of which data volume is relatively large. Therefore, the configuration of the terminal unit 400 can be simplified. Also, if the map information and the traffic-congestion prediction table 10 stored in the server 500 are updated, the terminal units 400 can share the updated information. Thus, the navigation system 200 can be improved in terms of the maintenance and management ability and the operation ability. Further, the terminal units 400 can appropriately acquire the most updated information and provide good navigating according to the most updated information, thereby improving the usability.

The server 500 storing the map information and the traffic-congestion prediction table 10 searches for the travel route and delivers the travel route to the terminal unit 400. With this configuration, the processing load of the terminal units 400 can be reduced. In other words, the terminal unit 400 is not required to have a large processing capacity, so that the terminal unit 400 may be simply configured allowing the use in a mobile phone etc. Thus, the size and the cost thereof can be reduced, and thereby easily promoting the wide use thereof.

Since the processor 180 of the terminal unit 400 and the CPU 550 of the server 500 are configured as programs, the use of the map information is facilitated and thereby easily promoting the wider use thereof. The programs may be recorded on recording medium so that a computing section, or a computer, reads them. With this configuration, the use of the map information can be facilitated and the programs can easily be handled, thereby further expanding the use thereof. The computing section may not necessarily be a single computer but may be a plurality of computers connected over a network, elements such as a CPU and a microcomputer, or a circuit board on which a plurality of electronic parts are mounted.

### [Modification of Embodiment]

The present invention is not limited to the above specific embodiments, but includes modifications and improvements as long as the objects of the present invention can be attained.

The movable body is not limited to a vehicle, but includes any movable body such as an airplane or a ship. The user oneself may be the movable body if the current-position of the user carrying the terminal unit 400 is recognized as the current-position of the terminal unit 400. Additionally, as mentioned earlier, a mobile phone or a PHS (Personal Handyphone System) may be used as the terminal unit 400 that can be carried directly by the user, while the base station of the mobile phone or the PHS may be used as the server 500. With this arrangement, the mobile phone or the PHS may acquire information from the base station. In any case, as described above, the present invention is most effectively applicable to a movable body to which a traffic-congestion or the like can be an obstacle to the travel thereof.

The traffic condition is not limited to traffic-congestion condition but may include various situations relating to other conditions when the movable body travels.

While some of the travel routes selected based on the destination information and setting information are transmitted in the above described embodiments, the travel route may be selected, or searched, only on the basis of the current-position information and the destination information. While the current-position recognizer recognizes the current-position information based on the data output from the various sensors and the GPS data output from the GPS receiver in the above described embodiments, other arrangement method may alternatively be used to recognize the current-position of the movable body. As described above, the current-position recognizer may recognize the simulated current-position input at the terminal input section 130 as the current-position. While some travel routes are notified so that the user can select one of them, only the best travel route may be notified.

Further, it is also available that the prediction map information 184A3, 184B3 is generated by calculating the prediction traffic information of an area ahead in the driving direction of the movable body without the travel route being set, other than the case that the prediction map information 184A3, 184B3 is generated with the use of the prediction traffic information on the travel route when the prediction traffic information is notified with the travel route being set. For example, such a configuration may be adopted that the direction to which the vehicle is driving is recognized by the azimuth sensor, and the traffic condition as well as the predicted traffic condition on the side of the driving direction, i.e. that of an area ahead in the driving direction of the vehicle are notified. According to the above configuration, the substantially same advantages can be obtained.

Further, though it is described that one prediction map information 184A3, 184B3 is displayed substantially in parallel relative to the current map information 184A1, 184B1, for example, the plurality of prediction map information 184A3, 184B3 can be generated per an hour to be displayed substantially in parallel. In other words, in the present invention, any configuration can be adopted as long as at least the traffic condition at the current point and the traffic condition with the predetermined period of time has passed are respectively superimposed on the map information to be displayed by at least dual-screen. With use of the screen displaying a plurality of images, the traffic condition can further appropriately be notified, and the user can further clearly recognize how the traffic condition changes.

The prediction traffic information such as the predicted traffic-congestion information used for the prediction map information 184A3, 184B3 is not limited to the range where the movable body can travel in the predetermined period of time.

Further, the area indicator 184B9 representing the area corresponding to the traveling area as well as to the current map information 184A1, 184B1 may not be superimposed, but in case of using the indicator, the expression to be displayed can utilize drawing a circle, darkening the outside of the area, using various colors in the area while using limited colors, e.g., two colors in the outside of the area, or any other expression.

The current time icon 184A5, the elapsed time icon 184A6 and the text box, on which the text data 184B5, 184B6 is displayed, may not be provided to the current map information 184A1, 184B1 and the prediction map information 184A3, 184B3. Further, the expression of the indication representing the traffic condition at the current time or the traffic condition when the predetermined time has passed is not limited to the above expression, but any expression may be utilized.

While the area to be displayed can be scrolled, i.e., the display area can be shifted in the above description, but it is not limited thereto. That is, such a configuration without scrolling, i.e., the screen information 184A, 184B may newly be created for displaying other areas. Further, while the current map information 184A1, 184B1 and the prediction map information 184A3, 184B3 are synchronously shifted with each other when scrolling, it is not limited thereto. That is, the current map information 184A1, 184B1 and the prediction map information 184A3, 184B3 may independently be scrolled. Besides, the configuration of scrolling to shift the display area may employ any method.

The prediction traffic information is not limited to the one related to the change of the traffic condition over time based on the statistical traffic condition obtained by statistically processing the past traffic conditions based on the time factors, and any prediction information can be utilized.

In the second embodiment, while it is described that the server 500 generates the screen information 184A, 184B to cause the terminal unit 400 to display the information, it is not limited thereto. The current map information 184A1, 184B1 and the prediction map information 184A3, 184B3 may be generated to be transmitted to the terminal unit 400 and displayed by the dual-screen using the display controller 184; or the current traffic information, the prediction traffic information and the map information may be transmitted to the terminal unit 400, so that the current map information 184A1, 184B1 and the prediction map information 184A3, 184B3 are generated by the terminal unit 400 to be displayed by the dual-screen.

While the functions are realized in the form of programs in the above description, the functions may be realized in any form including a hardware such as a circuit board or elements such as IC (Integrated Circuit). In view of easy handling and promotion of the use, the functions are preferably stored and read from programs or recording media.

While the server 500 stores the map information and the traffic-congestion prediction table 10 in the above described second embodiment, the terminal unit 400 may alternatively stores at least either the map information or the traffic-congestion prediction table 10.

While the transceiver 410 is arranged in the terminal unit 400 in the above description, the transceiver 410 may be separated from the terminal unit 400 and, for example, a mobile phone or a PHS may be used as the transceiver 410. In this case, the terminal unit 400 is connected to the transceiver 410 to send/receive information when necessary.

Further, not only the change in the traffic condition such as traffic-congestion, slow-traffic or the like, but also landslide or the like, and bad weather such as approach of the typhoon, rain storm or snow storm causing to be an obstacle when the movable body travels, i.e., the vehicle drives can be the subject of the change in the traffic condition.

The arrangements and the operating procedures for the present invention may be appropriately modified as long as the scope of the present invention can be attained.

### [Advantages of Embodiments]

As described above, in the above embodiments, based on the traffic information such as the VICS data, the current traffic-congestion information, the traffic-congestion prediction information related to the traffic condition and the like, the current map information 184A1, 184B1, in which the traffic condition of the predetermined area at the current time is superimposed on the map information of the predetermined area, and the prediction map information 184A3, 184B3, in which the predicted traffic condition of the predetermined area when the predetermined period of time has passed is superimposed on the map information of the predetermined area, are generated by the display controller 184, and the terminal display 140 is controlled so that the current map information 184A1, 184B1 and the prediction map information 184A3, 184B3 are displayed substantially in parallel on the single display area, on which the terminal display 140 displays the information. Therefore, the changes in the traffic condition can easily be recognized. For example, it can easily be determined whether the user continues to drive or avoids the problem, and if avoids, which route will be taken etc, thus notifying the traffic condition to the user appropriately.

Further, in the above embodiments, when the server 500 acquires the request signal sent from the terminal unit 400 over the network 300, based on the traffic information such as the VICS data, the current traffic-congestion information, the traffic-congestion prediction information related to the traffic condition and the like, the current map information 184A1, 184B1, in which the traffic condition of the predetermined area at the current time is superimposed on the map information of the predetermined area, and the prediction map information 184A3, 184B3, in which the predicted traffic condition of the predetermined area when the predetermined period of time has passed is superimposed on the map information of the predetermined area, are generated, and the terminal display 140 of the terminal unit 400 is controlled so that the current map information 184A1, 184B1 and the prediction map information 184A3, 184B3 are displayed substantially in parallel on the single display area, on which the terminal display 140 displays the information. Therefore, in the same manner as the first embodiment, the changes in the traffic condition can easily be recognized. For example, it can easily be determined whether the user continues to drive or avoids the problem, and if avoids, which route will be taken etc, thus notifying the traffic condition to the user appropriately.

## Claims

1. A traffic condition notifying device (100), comprising:
a map information acquirer (187) for acquiring map information;
a traffic information acquirer (120) for acquiring traffic information about a traffic condition for a movable body;
a timer (191) for clocking a time;
a notification map generator (184) for generating current map information (184A1,184B1), in which the traffic condition of a predetermined area at the current time is superimposed on the map information and prediction map information (184A3,184B3), in which the traffic condition of an area including at least the predetermined area with a predetermined period of time has passed is superimposed on the map information, based on the acquired traffic information; and
a display controller (184),
**characterised in that** the display controller is arranged to control a display section (140), having separate first (184A2,184B2) and second (184A4,184B4) display areas, to display the current map information and the prediction map information substantially in parallel on the first display area and the second display area, respectively.

2. The traffic condition notifying device (100) according to claim 1, further comprising:
a current-position information acquirer (181) for acquiring current-position information about a current-position of the movable body; and
an elapsed time information acquirer for acquiring elapsed time information about an elapsed time passed from the current time,
wherein the notification map generator (184), based on the current-position information and the map information, recognises a traveling area where the movable body can travel when the elapsed time information previously acquired has passed, and generates the prediction map information on an area including the traveling area of the map information.

3. The traffic condition notifying device (100) according to claim 2, wherein the notification map generator (184) generates the prediction map information (184A3, 184B3) by superimposing on the map information an indicator (184B9) representing the travelling area.

4. The traffic condition notifying device (100) according to claim 2 or 3, wherein the notification map generator (184) generates the prediction map information (184A3, 184B3) by superimposing on the map information the traffic condition in the traveling area when a predetermined period of time has passed.

5. The traffic condition notifying device (100) according to claim 4, further comprising:
a traveling direction acquirer for acquiring traveling direction information about a travelling direction of the movable body,
wherein the notification map generator (184) generates the prediction map information (184A3, 184B3) by superimposing on the map information the traffic condition of an area ahead in the traveling direction of the movable body when the predetermined period of time has passed, based on the traveling direction information.

6. The traffic condition notifying device (100) according to any one of claims 1 to 5, wherein the notification map generator (184) provides on the current map information (184A1,184B1) an indicator (C) representing the traffic condition at the current time, and provides on the prediction map information (184A3,184B3) an indicator representing the traffic condition when the predetermined period of time has passed.

7. The traffic condition notifying device (100) according to any one of claims 1 to 6, further comprising:
a current-position information acquirer (181) for acquiring current-position information about a current-position of the movable body;
a destination information acquirer (182) for acquiring destination information about a position of a destination to which the movable body travels; and
a travel route setting section (188) for setting a travel route for the movable body based on the current-position information, the destination information and the map information,
wherein the notification map generator (184) recognises a predicted position to which the movable body moves on the travel route when the predetermined period of time has passed, and superimposes an indicator (184A8) representing the prediction position on the predicted map information.

8. The traffic condition notifying device (100) according to any one of claims 1 to 7, further comprising:
a request information acquirer (184) for acquiring request information that requests to shift the display area being displayed by the display section for at least either the current map information (184A1,184B1) or the prediction map information (184A3,184B3),
wherein the display controller, when recognising acquisition of the request information by the request information acquirer, shifts the display area of the current map information and the prediction map information synchronously on the display section.

9. The traffic condition notifying device (100) according to any one of claims 1 to 8, wherein the traffic information acquirer (120) acquires, as traffic information, at least either the current traffic information about the traffic condition at the current time and the traffic prediction information about the change of the traffic condition over time based on a statistical traffic condition obtained by statistically processing the past traffic conditions based on time factors.

10. A traffic condition notifying system (200), comprising:
a server (500) having a storage for storing map information; and
the traffic condition notifying device (100) according to any one of claims 1 to 9 for acquiring the map information from the server over a network (300).

11. A traffic condition notifying system (200), comprising:
the traffic condition notifying device (100) according to any one of claims 1 to 9; and
a terminal unit (400) connected to the traffic condition notifying device over a network (300) so as to transit or receive data, the terminal unit including a display section (140) for displaying the current map information (184A1,184B1) and the prediction map information (184A3,184B3) substantially in parallel on a single display area to be displayed.

12. A traffic condition notifying system (200), comprising:
a terminal unit (400) including a display section (140) to display map information; and
a server (500) to which the terminal unit is connected so as to transmit or receive data over a network (300), the server including a storage (420) for storing the map information, a traffic information acquirer (120) for acquiring traffic information about a traffic condition of a movable body, a timer (191) for clocking a time, and a notification map generator (184) for generating a current map information (184A1,184B1) in which the traffic condition of a predetermined area at the current time is superimposed on the map information, and prediction map information (184A3,184B3) in which the traffic condition of an area including at least the predetermined area when a predetermined period of time has passed is superimposed on the map information, based on the acquired traffic information,
wherein at least one of the terminal unit (400) and the server (500) includes a display controller (184),
**characterised in that**:
the display section comprises separate first (184A2,184B2) and second (184A4,184B4) display areas; and
the display controller is arranged to control the display section (140) to display the current map information and the prediction map information substantially in parallel on the first display area and the second display area, respectively.

13. A traffic condition notifying method, comprising the steps of:
acquiring map information and traffic information about a traffic condition of a movable body;
generating current map information (184A1,184B1) by superimposing on the map information the traffic condition of a predetermined area at the current time, as well as a prediction map information (184A3,18483) by superimposing on the map information the traffic condition of an area including at least the predetermined area when a predetermined period of time has passed, based on the acquired traffic information; and
controlling a display section (140), having separate first (184A2,184B2) and second (184A4,184B4) display areas, to display the current map information and the prediction map information substantially in parallel on the first display area and the second display area, respectively.

14. A traffic condition notifying program arranged to execute the traffic condition notifying method according to claim 13 by a computer.

15. A recording medium storing the traffic condition notifying program according to claim 14 in a manner readable by a computer.

## Patentansprüche

1. Verkehrszustands-Mitteilungsvorrichtung (100), die umfasst:
eine Karteninformations-Erfassungseinrichtung (187) zum Erfassen von Karteninformationen;
eine Verkehrsinformations-Erfassungseinrichtung (120) zum Erfassen von Verkehrsinformationen über einen Verkehrszustand für einen beweglichen Körper;
ein Zeitglied (191) zum Takten einer Zeit;
eine Einrichtung (184) zum Erzeugen einer Mitteilungs-Karte, die aktuelle Karteninformationen (184A1, 184B1), in denen der Verkehrszustand eines vorgegebenen Gebiets zu der aktuellen Zeit auf die Karteninformationen aufgelegt ist, und Vorhersage-Karteninformationen (184A3, 184B3), in denen der Verkehrszustand eines Gebietes einschließlich wenigstens des vorgegebenen Gebietes nach Ablauf eines vorgegebenen Zeitraums aufgelegt ist, auf Basis der erfassten Verkehrsinformationen auf die Karteninformationen erzeugt; und
eine Anzeige-Steuereinheit (184),
**dadurch gekennzeichnet, dass** die Anzeige-Steuereinheit so eingerichtet ist, dass sie einen Anzeigeabschnitt (140) steuert, der einen ersten (184A2, 184B2) und einen zweiten (184A4, 184B4) separaten Anzeigebereich aufweist, um die aktuellen Karteninformationen und die Vorhersage-Karteninformationen im Wesentlichen parallel auf dem ersten Anzeigebereich bzw. dem zweiten Anzeigebereich anzuzeigen.

2. Verkehrszustands-Mitteilungsvorrichtung (100) nach Anspruch 1, die des Weiteren umfasst:
eine Einrichtung (181) zum Erfassen aktueller Positionsinformationen, die aktuelle Positionsinformationen über eine aktuelle Position des beweglichen Körpers erfasst; und
eine Einrichtung zum Erfassen von Informationen über verstrichene Zeit, die Informationen über verstrichene Zeit bezüglich einer verstrichenen Zeit erfasst, die von der aktuellen Zeit an vergangen ist,
wobei die Einrichtung (184) zum Erzeugen der Mitteilungs-Karte auf Basis der aktuellen Positionsinformationen und der Karteninformationen ein Fahrgebiet erkennt, in dem der bewegliche Körper fahren kann, wenn die zuvor erfassten Informationen über verstrichene Zeit verstrichen sind, und die Vorhersage-Karteninformationen über ein Gebiet erzeugt, das das Fahrgebiet der Karteninformationen einschließt.

3. Verkehrszustands-Mitteilungsvorrichtung (100) nach Anspruch 2, wobei die Einrichtung (184) zum Erzeugen der Mitteilungs-Karte die Vorhersage-Karteninformationen (184A3, 184B3) erzeugt, indem sie eine Anzeige (184B9), die das Fahrgebiet darstellt, auf die Karteninformationen auflegt.

4. Verkehrszustands-Mitteilungsvorrichtung (100) nach Anspruch 2 oder 3, wobei die Einrichtung (184) zum Erzeugen der Mitteilungs-Karte die Vorhersage-Karteninformationen (184A3, 184B3) erzeugt, indem sie den Verkehrszustand in dem Fahrgebiet nach dem Verstreichen eines vorgegebenen Zeitraums auf die Karteninformationen auflegt.

5. Verkehrszustands-Mitteilungsvorrichtung (100) nach Anspruch 4, die des Weiteren umfasst:
eine Fahrtrichtungs-Erfassungseinrichtung zum Erfassen von Fahrtrichtungs-Informationen über eine Fahrtrichtung des beweglichen Körpers,
wobei die Einrichtung (184) zum Erzeugen der Mitteilungs-Karte die Vorhersage-Karteninformationen (184A3, 184B3) erzeugt, indem sie den Verkehrszustand eines Gebietes, das in der Fahrtrichtung vor dem beweglichen Körper liegt, wenn der vorgegebene Zeitraum verstrichen ist, auf Basis der Fahrtrichtungsinformationen auf die Karteninformationen auflegt.

6. Verkehrszustands-Mitteilungsvorrichtung (100) nach einem der Ansprüche 1 bis 5, wobei die eine Richtung (184) zum Erzeugen der Mitteilungs-Karte auf den aktuellen Karteninformationen (184A1, 184B1) eine Anzeige (C) bereitstellt, die den Verkehrszustand zu aktuellen Zeit darstellt, und auf den Vorhersage-Karteninformationen (184A3, 184B3) eine Anzeige bereitstellt, die den Verkehrszustand nach Verstreichen des vorgegebenen Zeitraums darstellt.

7. Verkehrszustands-Mitteilungsvorrichtung (100) nach einem der Ansprüche 1 bis 6, die des Weiteren umfasst:
eine Einrichtung (181) zum Erfassen aktueller Positionsinformationen, die aktuelle Positionsinformationen über eine aktuelle Position des beweglichen Körpers erfasst;
eine Zielinformations-Erfassungseinrichtung (182), die Zielinformationen über eine Position eines Ziels erfasst, zu dem der bewegliche Körper fährt, und
einen Fahrtrouten-Einstellabschnitt (181) zum Einstellen einer Fahrtroute für den beweglichen Körper auf Basis der aktuellen Positionsinformationen, der Zielinformationen und der Karteninformationen,
wobei die Einrichtung (184) zum Erzeugen der Mitteilungs-Karte eine vorhergesagte Position erkennt, zu der sich der bewegliche Körper auf der Fahrtroute bewegt, wenn der vorgegebene Zeitraum verstrichen ist, und eine Anzeige (184A8), die die Vorhersageposition darstellt, auf die Vorhersage-Karteninformationen auflegt.

8. Verkehrszustands-Mitteilungsvorrichtung (100) nach einem der Ansprüche 1 bis 7, die des Weiteren umfasst:
eine Anforderungsinformations-Erfassungseinrichtung (184) zum Erfassen von Anforderungsinformationen, die Verschiebung des durch den Anzeigeabschnitt angezeigten Anzeigebereiches wenigstens für die aktuellen Karteninformationen (184A1, 184B1) oder die Vorhersage-Karteninformationen (184A3, 184B3) anfordern,
wobei die Anzeige-Steuereinheit, wenn sie Erfassen der Anforderungsinformationen durch die Anforderungsinformations-Erfassungseinrichtung erkennt, den Anzeigebereich der aktuellen Karteninformationen und der Vorhersage-Karteninformationen synchron auf dem Anzeigeabschnitt verschiebt.

9. Verkehrszustands-Mitteilungsvorrichtung (100) nach einem der Ansprüche 1 bis 8, wobei die Verkehrsinformations-Erfassungseinrichtung (120) als Verkehrsinformationen wenigstens die aktuellen Verkehrsinformationen über den Verkehrszustand zu der aktuellen Zeit und die Verkehrsvorhersageinformationen über die Änderung des Verkehrszustandes mit der Zeit auf Basis eines statistischen Verkehrszustandes erfasst, der ermittelt wird, indem die früheren Verkehrszustände auf Basis von Zeitfaktoren statistisch verarbeitet werden.

10. Verkehrszustands-Mitteilungssystem (200), das umfasst:
einen Server (500), der einen Speicher zum Speichern von Karteninformationen hat; und
die Verkehrszustands-Mitteilungsvorrichtung (100) nach einem der Ansprüche 1 bis 9 zum Erfassen der Karteninformationen von dem Server über ein Netzwerk (300).

11. Verkehrszustands-Mitteilungssystem (200), das umfasst:
die Verkehrszustands-Mitteilungsvorrichtung (100) nach einem der Ansprüche 1 bis 9; und
eine Endgeräteeinheit (400), die mit der Verkehrszustands-Mitteilungsvorrichtung über ein Netzwerk (300) so verbunden ist, dass sie Daten sendet oder empfängt, wobei die Endgeräteeinheit einen Anzeigeabschnitt (140) zum Anzeigen der aktuellen Karteninformationen (184A1, 184B1) und der Vorhersage-Karteninformationen (184A3, 184B3) im Wesentlichen parallel auf einem anzuzeigenden einzelnen Anzeigebereich enthält.

12. Verkehrszustands-Mitteilungssystem (200), das umfasst:
eine Endgeräteeinheit (400), die einen Anzeigeabschnitt (140) zum Anzeigen von Karteninformationen enthält; und
einen Server (500), mit dem die Endgeräteeinheit so verbunden ist, dass sie Daten über ein Netzwerk (300) sendet oder empfängt, wobei der Server einen Speicher (420) zum Speichern der Karteninformationen, eine Verkehrsinformations-Erfassungseinrichtung (120) zum Erfassen von Verkehrsinformationen über einen Verkehrszustand eines beweglichen Körpers, ein Zeitglied (191) zum Takten einer Zeit und eine Einrichtung (184) zum Erzeugen einer Mitteilungs-Karte umfasst, die aktuelle Karteninformationen (184A1, 184B1), in denen der Verkehrszustand eines vorgegebenen Gebietes zu der aktuellen Zeit auf die Karteninformationen aufgelegt ist, und Vorhersage-Karteninformationen (184A3, 184B3), in denen der Verkehrszustand eines Gebietes einschließlich wenigstens des vorgegebenen Gebietes nach Ablauf eines vorgegebenen Zeitraums auf die Karteninformationen aufgelegt ist, auf Basis der erfassten Verkehrsinformationen erzeugt,
wobei wenigstens die Endgeräteeinheit (400) oder der Server (500) eine Anzeige-Steuereinheit (184) enthält,
**dadurch gekennzeichnet, dass**
der Anzeigeabschnitt einen separaten ersten (184A2, 184B2) und zweiten (184A4, 184B4) Anzeigebereich umfasst; und
die Anzeige-Steuereinheit so eingerichtet ist, dass sie den Anzeigeabschnitt (140) so steuert, dass er die aktuellen Karteninformationen und die Vorhersage-Karteninformationen im Wesentlichen parallel auf den ersten Anzeigebereich bzw. dem zweiten Anzeigebereich anzeigt.

13. Verkehrszustands-Mitteilungsverfahren, das die folgenden Schritte umfasst:
Erfassen von Karteninformationen und Verkehrsinformationen über einen Verkehrszustand eines beweglichen Körpers;
Erzeugen aktueller Karteninformationen (184A1, 184B1) durch Auflegen des Verkehrszustandes eines vorgegebenen Gebietes zu der aktuellen Zeit auf die Karteninformationen sowie von Vorhersage-Karteninformationen (184A3, 184B3) durch Auflegen des Verkehrszustandes eines Gebietes, das wenigstens das vorgegebene Gebiet einschließt, nach Ablauf eines vorgegebenen Zeitraums auf die Karteninformationen auf Basis der erfassten Verkehrsinformationen; und
Steuern eines Anzeigeabschnitts (140), der einen separaten ersten (184A2, 184B2) und zweiten (184A4, 184B4) Anzeigebereich aufweist, um die aktuellen Karteninformationen und die Vorhersage-Karteninformationen im Wesentlichen parallel auf dem ersten Anzeigebereich bzw. dem zweiten Anzeigebereich anzuzeigen.

14. Verkehrszustands-Mitteilungsprogramm, das so eingerichtet ist, dass es das Verkehrszustands-Mitteilungsverfahren nach Anspruch 13 mit einem Computer ausführt.

15. Aufzeichnungsmedium, das das Verkehrszustands-Mitteilungsprogramm nach Anspruch 14 auf durch einen Computer lesbare Weise speichert.

## Revendications

1. Dispositif de notification de conditions de trafic (100), comprenant :
une unité d'acquisition d'informations cartographiques (187) pour acquérir des informations cartographiques ;
une unité d'acquisition d'informations de trafic (120) pour acquérir des informations de trafic concernant une condition de trafic pour un corps mobile ;
un temporisateur (191) pour cadencer un temps ;
un générateur de carte de notification (184) pour générer des informations cartographiques actuelles (184A1, 184B1), où la condition de trafic d'une zone prédéterminée au moment actuel est superposée sur les informations cartographiques et des informations cartographiques de prédiction (184A3, 184B3), où la condition de trafic d'une zone incluant au moins la zone prédéterminée avec une période de temps prédéterminée qui s'est passée est superposée sur les informations cartographiques, sur la base des informations de trafic acquises ; et
un contrôleur d'affichage (184),
**caractérisé en ce que** le contrôleur d'affichage est agencé pour contrôler une section d'affichage (140), ayant des première (184A2, 184B2) et seconde (184A4, 184B4) zones d'affichage séparées, pour afficher les informations cartographiques actuelles et les informations cartographiques de prédiction sensiblement en parallèle sur la première zone d'affichage et la seconde zone d'affichage, respectivement.

2. Dispositif de notification de conditions de trafic (100) selon la revendication 1, comprenant en outre :
une unité d'acquisition d'informations de position actuelle (181) pour acquérir des informations de position actuelle concernant une position actuelle du corps mobile ; et
une unité d'acquisition d'informations de temps écoulé pour acquérir des informations de temps écoulé concernant un temps écoulé qui a passé depuis le moment actuel,
dans lequel le générateur de carte de notification (184), sur la base des informations de position actuelle et des informations cartographiques, reconnaît une zone de déplacement où le corps mobile peut se déplacer lorsque les informations de temps écoulé précédemment acquises sont passées, et génère les informations cartographiques de prédiction sur une zone incluant la zone de déplacement des informations cartographiques.

3. Dispositif de notification de conditions de trafic (100) selon la revendication 2, dans lequel le générateur de carte de notification (184) génère les informations cartographiques de prédiction (184A3, 184B3) en superposant sur les informations cartographiques un indicateur (184B9) représentant la zone de déplacement.

4. Dispositif de notification de conditions de trafic (100) selon la revendication 2 ou 3, dans lequel le générateur de carte de notification (184) génère les informations cartographiques de prédiction (184A3, 184B3) en superposant sur les informations cartographiques la condition du trafic dans la zone de déplacement lorsqu'une période de temps prédéterminée s'est passée.

5. Dispositif de notification de conditions de trafic (100) selon la revendication 4, comprenant en outre :
une unité d'acquisition de direction de déplacement pour acquérir des informations de direction de déplacement concernant une direction de déplacement du corps mobile,
dans lequel le générateur de carte de notification (184) génère les informations cartographiques de prédiction (184A3, 184B3) en superposant sur les informations cartographiques la condition de trafic d'une zone située devant dans la direction de déplacement du corps mobile lorsque la période de temps prédéterminée s'est passée, sur la base des informations de direction de déplacement.

6. Dispositif de notification de conditions de trafic (100) selon l'une quelconque des revendications 1 à 5, dans lequel le générateur de carte de notification (184) fournit sur les informations cartographiques actuelles (184A1, 184B1) un indicateur (C) représentant la condition du trafic au moment actuel, et fournit sur les informations cartographiques de prédiction (184A3, 184B3) un indicateur représentant la condition du trafic lorsque la période de temps prédéterminée s'est passée.

7. Dispositif de notification de conditions de trafic (100) selon l'une quelconque des revendications 1 à 6, comprenant en outre :
une unité d'acquisition d'informations de position actuelle (181) pour acquérir des informations de position actuelle concernant une position actuelle du corps mobile ;
une unité d'acquisition d'informations de destination (182) pour acquérir des informations de destination concernant une position d'une destination vers laquelle se déplace le corps mobile ; et
une section d'établissement d'itinéraire de déplacement (188) pour établir un itinéraire de déplacement pour le corps mobile sur la base des informations de position actuelle, des informations de destination et des informations cartographiques,
dans lequel le générateur de carte de notification (184) reconnaît une position prédite vers laquelle se dirige le corps mobile sur l'itinéraire de déplacement lorsque la période de temps prédéterminée s'est passée, et superpose un indicateur (184A8) représentant la position de prédiction sur les informations cartographiques prédites.

8. Dispositif de notification de conditions de trafic (100) selon l'une quelconque des revendications 1 à 7, comprenant en outre :
une unité d'acquisition d'informations de requête (184) pour acquérir des informations de requête qui demandent de changer la zone d'affichage qui est affichée par la section d'affichage pour au moins soit les informations cartographiques actuelles (184A1, 184B1) soit les informations cartographiques de prédiction (184A3, 184B3),
dans lequel le contrôleur d'affichage, lors de la reconnaissance de l'acquisition des informations de requête par l'unité d'acquisition d'informations de requête, change la zone d'affichage des informations cartographiques actuelles et des informations cartographiques de prédiction de manière synchrone sur la section d'affichage.

9. Dispositif de notification de conditions de trafic (100) selon l'une quelconque des revendications 1 à 8, dans lequel l'unité d'acquisition d'informations de trafic (120) acquiert, comme informations de trafic, au moins soit les informations de trafic actuel concernant la condition du trafic au moment actuel et les informations de prédiction de trafic concernant le changement de la condition du trafic dans le temps sur la base d'une condition de trafic statistique obtenue en traitant statistiquement les conditions de trafic passées sur la base de facteurs temporels.

10. Système de notification de conditions de trafic (200), comprenant :
un serveur (500) ayant une mémoire pour stocker des informations cartographiques ; et
le dispositif de notification de conditions de trafic (100) selon l'une quelconque des revendications 1 à 9 pour acquérir les informations cartographiques à partir du serveur sur un réseau (300).

11. Système de notification de conditions de trafic (200), comprenant :
le dispositif de notification de conditions de trafic (100) selon l'une quelconque des revendications 1 à 9 ; et
une unité terminale (400) connectée au dispositif de notification de conditions de trafic sur un réseau (300) afin de transmettre ou de recevoir des données, l'unité terminale incluant une section d'affichage (140) pour afficher les informations cartographiques actuelles (184A1, 184B1) et les informations cartographiques de prédiction (184A3, 184B3) sensiblement en parallèle sur une seule zone d'affichage devant être affichée.

12. Système de notification de conditions de trafic (200), comprenant :
une unité terminale (400) incluant une section d'affichage (140) pour afficher des informations cartographiques ; et
un serveur (500) auquel l'unité terminale est connectée afin de transmettre ou de recevoir des données sur un réseau (300), le serveur incluant une mémoire (420) pour stocker les informations cartographiques, une unité d'acquisition d'informations de trafic (120) pour acquérir des informations de trafic concernant une condition de trafic d'un corps mobile, un temporisateur (191) pour cadencer un temps, et un générateur de carte de notification (184) pour générer des informations cartographiques actuelles (184A1, 184B1) où la condition de trafic d'une zone prédéterminée au moment actuel est superposée sur les informations cartographiques, et des informations cartographiques de prédiction (184A3, 184B3) où la condition de trafic d'une zone incluant au moins la zone prédéterminée lorsqu'une période de temps prédéterminée s'est passée est superposée sur les informations cartographiques, sur la base des informations de trafic acquises,
dans lequel au moins un de l'unité terminale (400) et du serveur (500) inclut un contrôleur d'affichage (184),
**caractérisé en ce que** :
la section d'affichage comprend des première (184A2, 184B2) et seconde (184A4, 184B4) zones d'affichage séparées ; et
le contrôleur d'affichage est agencé pour contrôler la section d'affichage (140) pour afficher les informations cartographiques actuelles et les informations cartographiques de prédiction sensiblement en parallèle sur la première zone d'affichage et la seconde zone d'affichage, respectivement.

13. Procédé de notification de conditions de trafic, comprenant les étapes consistant à :
acquérir des informations cartographiques et des informations de trafic concernant une condition de trafic d'un corps mobile ;
générer des informations cartographiques actuelles (184A1, 184B1) en superposant sur les informations cartographiques la condition de trafic d'une zone prédéterminée au moment actuel, ainsi que des informations cartographiques de prédiction (184A3, 184B3) en superposant sur les informations cartographiques la condition de trafic d'une zone incluant au moins la zone prédéterminée lorsqu'une période de temps prédéterminée s'est passée, sur la base des informations de trafic acquises ; et
contrôler une section d'affichage (140), ayant des première (184A2, 184B2) et seconde (184A4, 184B4) zones d'affichage séparées, pour afficher les informations cartographiques actuelles et les informations cartographiques de prédiction sensiblement en parallèle sur la première zone d'affichage et la seconde zone d'affichage, respectivement.

14. Programme de notification de conditions de trafic agencé pour exécuter le procédé de notification de conditions de trafic selon la revendication 13 par un ordinateur.

15. Support d'enregistrement stockant le programme de notification de conditions de trafic selon la revendication 14 d'une manière lisible par un ordinateur.
